(19) Europäisches Patentamt
European Patent Office
Office européen des brevets

(11) **EP 2 520 911 B1**

(12) **EUROPÄISCHE PATENTSCHRIFT**

(45) Veröffentlichungstag und Bekanntmachung des Hinweises auf die Patenterteilung:
**12.07.2017   Patentblatt 2017/28**

(51) Int Cl.:
***G01G 19/00*** *(2006.01)*

(21) Anmeldenummer: **12075042.7**

(22) Anmeldetag: **25.04.2012**

(54) **Dynamische Waage mit mehreren Wägeschalen und Verfahren zum Betreiben der dynamischen Waage**

Dynamic weighing device with multiple weighing pans and method for operating the dynamic weighing device

Dispositif de pesage dynamique dotée de plusieurs plateaux de pesage et procédé de fonctionnement de la balance dynamique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2011   DE 102011100176**

(43) Veröffentlichungstag der Anmeldung:
**07.11.2012   Patentblatt 2012/45**

(73) Patentinhaber: **Francotyp-Postalia GmbH
13089 Berlin (DE)**

(72) Erfinder:
- **Hübler, Uwe
  15366 Neuen (DE)**
- **Kieser, Axel
  14165 Berlin (DE)**
- **Schlaaff, Torsten
  16341 Panketal (DE)**

(56) Entgegenhaltungen:
**EP-A2- 2 017 589**

**Beschreibung**

Die Erfindung betrifft eine dynamische Waage mit mehreren Wägeschalen gemäß der im Oberbegriff des Patentanspruchs 1 angegebenen Art und ein Verfahren zum Betreiben der dynamischen Waage gemäß der im Oberbegriff des Patentanspruchs 12 angegebenen Art. Die Erfindung gestattet einen erhöhten Durchsatz von den zu wiegenden Produkten unterschiedlicher Dimensionen, insbesondere von zu wiegenden Stückgütern, wie zum Beispiel von Poststücken u.a. Sendungen, aber auch von Wägegut, welches keine permanent festen Dimensionen aufweist. Die Erfindung ist für den Einsatz in Wägesystemen, in Frankiersystemen mit dynamischen Waagen oder in Postsystemen von unterschiedlichen Zustellern, Postbeförderern und Spediteuren geeignet, welche eine dynamische Waage aufweisen.

Aus der Offenlegungsschrift EP 20 65 686 A1 = US 2009/0139777 A1 ist eine parallele Anordnung zweier Wägeeinheiten bekannt, bei welcher der Durchsatz durch Parallelisierung des Wiegevorgangs gesteigert werden kann. Hierfür sind jedoch zusätzliche Vorrichtungen zum Teilen und Zusammenführen des Briefstroms vor und hinter der Waage notwendig, was den Platzbedarf in die Höhe treibt. Die Parallelschaltung zweier Wiegeeinheiten bringt das Problem des deutlich erhöhten Platzbedarfs aufgrund der beiden Einheiten zur Steuerung des Briefstroms, einen deutlich erhöhten Steuerungsaufwand sowie höhere Kosten mit sich.

Aus der Offenlegungsschrift US 2009/032311 A1 = WO 2007/057001 A1 des Titels "Verfahren zum Wiegen mit mehreren Wägezellen" ist eine Vorrichtung bekannt, welche Produktionslinien vermeidet, die speziell auf die Abmessungen von zu wiegenden Objekten ausgelegt sind. Das Wiegen von Objekten unterschiedlicher Abmessungen wird dadurch ermöglicht, dass die Wägeeinheiten im Wesentlichen quer zur Transportrichtung angeordnet sind, wobei die Produkte (bzw. Waren, Wägegut) flach auf der Transportvorrichtung aufliegen. Dadurch dass die Produkte mit ihrer größten Dimension quer zur Transportrichtung ausgerichtet gewogen werden, wird der Abstand zwischen den Waren verringert, was bei gleicher Transportgeschwindigkeit zum erhöhten Durchsatz der gewogenen Waren führt. Die quer zur Transportrichtung in derselben Ebene angeordneten Wägeeinheiten sind alle gleich aufgebaut und stehen mit der Bodenplatte auf derselben Tischplatte. Eine jede Wägeeinheit weist eine Wägezelle und eine Wägeschale mit einer Transportvorrichtung auf, die auf der Wägeschale der dynamischen Waage angeordnet ist. Bei diesem Verfahren müssen die Wägesignale der Wägeeinheiten miteinander gekoppelt werden, wobei aufwendige Berechnungsverfahren zum Einsatz kommen, da auf jede der Wägeeinheiten ein Anteil des Gewichts des Wägeguts verteilt wird.

Aus der Offenlegungsschrift EP 2017589A2 = US 2009/008859 A1 ist ein System bekannt, bei dem mindestens zwei Wägeeinheiten hintereinander geschaltet sind. Kurze Briefe können in kurzem Abstand mittels einer der Wägeeinheiten gewogen werden, bei langen Briefen ist das Wägeergebnis eine Superposition der Wägeergebnisse beider Wägeeinheiten. Nachteilig ist der höhere Aufwand gegenüber einem System mit nur einer einzigen Wiegeeinheit. Die Hintereinanderschaltung von mehreren Wiegeeinheiten macht einen deutlich erhöhten Rechenaufwand bei der Berechnung der Wiegewerte notwendig, der zeitkritisch werden kann. Es kann zu Schlupf-/Synchronisierungsproblemen zwischen den Wiegeeinheiten kommen, die zu Stößen führen können, die das Wiegeergebnis beeinflussen.

Im Bereich des dynamischen Wiegens bei der Postverarbeitung sind bereits von unterschiedlichen Anbietern verschiedene Lösungen bekannt. Die Firmen Neopost und Pitney Bowes setzen Wiegesysteme für auf der Rückseite liegend zugeführte flache Wiegegüter (Poststücke) ein, damit auf die Vorderseite der Poststücke ein Frankierstempel aufgebracht werden kann.

Aus dem europäischen Patent EP 974 819 B1 der Anmelderin geht bereits eine Vorrichtung zum Wiegen von bewegtem Postgut, insbesondere von auf einer Kante stehend angeordneten Poststücken (Briefen) hervor. Ein von einem Motor angetriebenes Transportband läuft auf Laufrollen über einen Wiegeteller, der mit einer Führungswand zur Führung der Poststücke ausgestattet ist. Die Führungswand ist im Winkel von 108° zur Tischplatte geneigt.

Auf der Führungswand rutschen die Poststücke auf deren Vorderseite gekippt weiter, während das annähernd horizontal angeordnete Transportband weiter bewegt wird, auf welchem die Poststücke auf einer Kante stehend transportiert werden. Unter Poststücken sind zum Beispiel Postkarten, kuvertierte Briefe u.a. Postgüter bis 20 mm Dicke zu verstehen. Der Durchsatz bei dem zuletzt genannten System beträgt ca. 50 Briefe pro Minute bei dynamischer Wägung des Postgutes. Der Durchsatz einer Frankiermaschine bestimmt sich aus der Anzahl der Briefe pro Zeiteinheit und beträgt max. 150 Briefe pro Minute. Bei einer gegeben en Transportgeschwindigkeit und einem Briefabstand von der Briefvorderkante des einen zu der Briefvorderkante des nächstfolgenden kuvertierten Briefes (edge-to-edge), ergibt sich der Durchsatz aus dem Quotienten aus der Transportgeschwindigkeit und dem Briefabstand. Der Motor, das Transportband mit Laufrollen und der Wiegeteller mit Führungswand belasten eine Wiegezelle. Auf einer Wiegezelle sind der Wiegeteller mit dem Transportband und den Laufrollen sowie ein erster Motor so angeordnet, dass die Wiegezelle mit einer Vorlast belastet wird. Ein erster Sensor ist am Einlauf der Wiegeeinheit angeordnet, der ein erstes Signal an eine Steuereinheit abgibt, welche den Wägevorgang für ein Poststück (Brief) startet. Außerdem ist ein zweiter Sensor am Auslauf der Wiegeeinheit vorgesehen, der ein zweites Signal an eine Steuereinheit abgibt, welche eine Mitteilung erzeugt, dass ein auf den Brief folgender Nachfolgebrief zugeführt werden kann. Die vorgenannten Komponenten bilden die dynamische Waage, die zusammen mit einer Frankiermaschine vom Typ Jetmail® in einem Frankiersystem der Anmelderin mit einer Systemgeschwindigkeit betrieben wird, welche den Durchsatz an Poststücken mitbestimmt.

Ein Frankiersystem von der Francotyp-Postalia GmbH besteht in einer fortgeschrittenen Ausbaustufe mindestens aus einer automatischen Zuführstation, einer dynamischen Waage und einer im Poststrom nachgeschalteten Frankiermaschine. Für die Frankiermaschine vom Typ centormail® wird ein Transportsystem eingesetzt, bei dem nacheinander auf einer Kante stehende Poststücke transportiert werden. Bei Poststücken wie Briefen kann ein Briefspektrum mit Brieflängen von 140 mm bis 353 mm verarbeitet werden. So weisen Briefe im Format C6 lang eine mittlere Brieflänge von 229 mm auf. Kundenanforderungen an einen höheren Durchsatz des Frankiersystems mit der Frankiermaschine centormail® machen es erforderlich, dass entweder die Transportgeschwindigkeit für Poststücke, insbesondere für Briefe, im System erhöht oder der Abstand zwischen den Briefen verringert wird.

Aus dem europäischen Patent 1014052 B1 ist ein Verfahren und Anordnung zum Bestimmen eines Gewichtes mit einer dynamischen Waage bekannt. Die Anordnung weist eine Transporteinrichtung, einen Wägeteller, eine Wägezelle, Sensoren und eine elektronische Steuereinheit auf, welche neben einer Steuerung der Transporteinrichtung eine Auswertung der von der Wägezelle übermittelten Meßwerte und die Ausgabe eines korrigierten Gewichtswertes über eine Schnittstelle an eine Frankiermaschine durchführt. Der Durchsatz des vorgenannten Systems wird auf ca. 50 Briefe pro Minute begrenzt. Zwar könnte auf Kosten der Genauigkeit der Wägewertes und Zuverlässigkeit des Poststücktransports der Durchsatz mit einer höheren Transportgeschwindigkeit noch gesteigert werden, jedoch sollen die Genauigkeit der Wägewertes und Zuverlässigkeit des Poststücktransports gerade nicht verringert werden. Wenn die dynamische Waage als Peripheriegerät für ein Frankiersystem eingesetzt wird, dann begrenzt das Frankiersystem die Transportgeschwindigkeit eines Poststückes. Eine Erhöhung der Systemgeschwindigkeit ist nicht oder in sehr engen, sehr genau zu betrachtenden Grenzen möglich. Begrenzende Faktoren sind gegebenenfalls auch durch andere Peripheriegeräte des Frankiersystems gegeben, beispielsweise eine mit steigender Geschwindigkeit abnehmende Vereinzelungssicherheit einer automatischen Poststückvereinzelungs- und Zuführstation. Beispielsweise werden auf die derzeitige Systemgeschwindigkeit des Frankiersystem Centormail® abgestimmte und abgesicherte Komponenten (Motoren, Getriebe, Leistungen, Dauerhaltbarkeit) eingesetzt. Weitere Beschränkungen resultieren auch aus den Verarbeitungszeiten, wie beispielsweise der Berechnungsgeschwindigkeit, der Abrechnungszeit für Frankierabdrucke im dynamischen Wiegemodus des Frankiersystem Centormail®. Die steigenden Kundenanforderungen an den Durchsatz des Systems machen es erforderlich, neue Konzepte zu finden.

Es war die Aufgabe zu lösen, die Nachteile des Standes der Technik zu überwinden und eine dynamische Waage mit mehreren Wägeschalen sowie ein Verfahren zur Erhöhung des Durchsatzes von Wägegut zu schaffen.

Die Aufgabe wird mit den Merkmalen einer dynamischen Waage mit mehreren Wägeschalen gemäß Anspruch 1 und mit den Schritten des Verfahrens zur Steuerung der dynamischen Waage gemäß Anspruch 12 gelöst.

Die Erfindung betrifft eine dynamische Waage, mit einer Vielzahl an Wägeeinheiten, wobei jede der Wägeeinheiten mindestens mit einer Wägezelle und mit einer Wägeschale ausgestattet ist, wobei die Wägeschale in einer oberen Ebene liegt und die Wägezelle zwischen der oberen Ebene und einer in Schwerkraftrichtung (d.h. entgegengesetzt zu einer y-Richtung) von der oberen Ebene entfernten unteren Ebene angeordnet ist.

Es sind eine erste Wägeeinheit und mindestens eine zweite Wägeeinheit mit einer seriell im Transportpfad benachbarten Anordnung einer zweiten Wägeschale zur ersten Wägeschale bei gleichzeitiger in Schwerkraftrichtung funktional kaskadierter Anordnung der Wägezellen vorgesehen, wobei die mindestens zweite Wägeeinheit mit ihrer unteren Ebene in einer x/z-Bezugsebene liegend befestigt ist, auf der die y-Richtung senkrecht steht.

Eine gemeinsame Steuereinheit der dynamischen Waage ist zu einem in allen Wägezellen gleichzeitig vollzogenen Starten der Wägevorgänge im dynamischen Wägemodus, zur Ansteuerung aller mit der Steuereinheit elektrisch verbundenen Motore in Abhängigkeit von Signalen der Sensoren und des Encoders zur Bestimmung und Regelung der Transportgeschwindigkeit und zur Auswertung der Gewichtsmessungen vorgesehen. Die dynamische Waage wird erfindungsgemäß in Abhängigkeit von den Signalen der Wägezellen gesteuert.

Eine dynamische Waage mit mehreren Wägeschalen umfasst eine Vielzahl an Sensoren und mindestens eine Transportvorrichtung für den Transport eines Wägeguts in eine Transportrichtung während des Wägens. Die Vielzahl an Sensoren und der Encoder sind mit den Eingängen der gemeinsamen Steuereinheit elektrisch verbunden. Die Transportvorrichtung weist einen Motor zum Antrieb der vorgenannten Transportvorrichtung und einen Encoder auf, wobei die Sensoren und der Encoder mit den Eingängen einer Steuereinheit und der Motor zum Antrieb der vorgenannten Transportvorrichtung mit den Ausgängen der Steuereinheit elektrisch verbunden sind. Bei n Wägeschalen sind mindestens von n+1 Sensoren im Transportpfad der dynamischen Waage angeordnet. Jede der Wägeeinheiten ist mit einer in der Transportrichtung verkürzten Wägeschale ausgestattet. In Abweichung von der Regel kann zwischen zwei jeweils eine Transportvorrichtung aufweisende Wägeschalen aber auch eine Wägeschale ohne Transportvorrichtung angeordnet werden. Mindestens jedoch eine erste Wägeschale der zueinander benachbarten Wägeschalen weist die Transportvorrichtung für Wägegut auf. Es sind also eine erste Wägeeinheit und mindestens eine zweite Wägeeinheit vorgesehen, deren Wägeschalen zueinander benachbart seriell im Transportpfad angeordnet und in der Transportrichtung verkürzt ausgeführt sowie in der gleichen oberen Ebene angeordnet sind.

Die Wägezellen jeder der Wägeeinheiten sind in Schwerkraftrichtung derart kaskadiert angeordnet sind, dass das Gewicht des Wägeguts und das Gesamtgewicht der ersten Wägeeinheit und das Gewicht mindestens einer weiteren Wägeschale der mindestens zweiten Wägeeinheit auf der Wägezelle der mindestens zweiten Wägeeinheit als Vorlast lastet. Das gilt bis zur n-ten Wägeeinheit, deren Wägeschale im Transportpfad zuletzt angeordnet ist. Die zugehörige Wägezelle ist mit einer Bodenplatte der dynamischen Waage verbunden. Für alle Wägezellen kann eine Wägezelle des gleichen Typs eingesetzt werden. Die Wägeschale der ersten Wägeeinheit ist vor der in Transportrichtung gelegenen Wägeschale der zweiten Wägeeinheit angeordnet. Ein erster Sensor ist nahe dem stromaufwärts gelegenen Anfang der Transportvorrichtung der Wägeschale der ersten Wägeeinheit, ein zweiter Sensor ist nahe dem stromabwärts gelegenen Ende der Transportvorrichtung der Wägeschale der ersten Wägeeinheit und ein dritter Sensor ist nahe dem stromabwärts gelegenen Ende der Transportvorrichtung der Wägeschale der zweiten Wägeeinheit angeordnet. Die gemeinsame Steuereinheit ist programmiert, um

- beim Eintreffen eines Startsignals einen Motor der Transportvorrichtung mindestens einer ersten Wägeeinheit anzusteuern,
- eine Vielzahl von Wägevorgängen im dynamischen Wägemodus zu starten, wenn der erste Sensor ein Eintreffen der Vorderkante eines zugeführten Wägeguts signalisiert,
- zu überprüfen, wenn der zweite Sensor ein Eintreffen der Vorderkante eines zugeführten Wägeguts signalisiert, ob die Elektronik der angeschlossenen Wägezelle der ersten Wägeeinheit ein stabiles Signal liefert oder noch nicht liefert, wobei bei einem stabilen Signal mehrere Messwerte für eine Messkurve vorliegen und die Messkurve nach einem ansteigenden Teil mindestens zwei Wendepunkte und zwei Umkehrpunkte aufweist, womit die Gewichtsmessung erfolgreich durchführbar ist,
- mindestens einen Motor anzusteuern, damit das Wägegut weiter in Transportrichtung z auf die Wägeschale der zweiten Wägeeinheit transportiert wird und
- bei erfolgreicher Gewichtsmessung eine Ein/Ausgabeeinheit zur Abgabe eines entsprechenden Signals an eine der ersten Wägeeinheit vorangestellten automatische Zuführstation zur Zuführung eines nachfolgenden Wägeguts zu der Wägeschale der ersten Wägeeinheit zu veranlassen oder
- anderenfalls den Wägevorgang mit der Wägezelle der zuletzt genutzten zweiten Wägeeinheit solange fortzusetzen bis der dritte Sensor ein Eintreffen der Vorderkante des Wägeguts am Ende der Transportvorrichtung der zuletzt genutzten Wägeschale signalisiert,
- beim Eintreffen der Vorderkante eines zugeführten Wägeguts am Ende der Transportvorrichtung der Wägeschale der zweiten Wägeeinheit zu überprüfen, ob die Elektronik der angeschlossenen Wägezelle der zweiten Wägeeinheit ein stabiles Signal liefert oder noch nicht liefert sowie
- entweder die Gewichtsmessung mit der Wägezelle der zweiten Wägeeinheit erfolgreich zu beenden, wobei die Elektronik der angeschlossenen Wägezelle der zweiten Wägeeinheit ein stabiles Signal liefert, oder
- anderenfalls ein Umschalten der dynamischen Waage vom dynamischen Wägemodus auf einen halbdynamischen Wägemodus vorzunehmen, wobei im halbdynamischen Wägemodus der mindestens eine Motor so angesteuert wird, dass der Transport des Wägeguts angehalten oder das Wägegut mindestens auf die zuletzt genutzte Wägeschale zurück transportiert und dann gewogen wird.

Durch die seriell im Wägepfad angeordnete zweite Wägeschale wird der Wägepfad auf die erforderliche Dimension in Transportrichtung für größer dimensionierte Wägegüter, beispielsweise mittel- bis großformatige Poststücke verlängert. Durch die Kürzung der Wägeschale der ersten Wägeeinheit in Verbindung mit der benachbarten Wägeschale der zweiten Wägeeinheit, auf deren Wägezelle die Wägezelle der ersten Wägeeinheit angeordnet ist, lässt sich ein deutlich kürzerer Wägegut-Abstand für kleinformatige Poststücke und somit ein deutlich höherer Wägegutdurchsatz ohne Erhöhung der Systemgeschwindigkeit auch für Mischpost erreichen.

Die Lösung lässt sich vorteilhaft ohne großen Aufwand auf dem gleichen Bauraum realisieren, welchen die bisher verwendete dynamische Waage der Frankiermaschine Centormail benötigt.

Die Erfindung kann durch den Einsatz weiterer Wägeeinheiten ergänzt werden, die dann mehrfach kaskadiert angeordnet werden können. Eine jede Wägeschale kann zur Lasteinleitung mechanisch direkt auf einen Messpunkt aufgesetzt oder indirekt über einen dazwischenliegenden Träger mit einem Messpunkt der zugehörigen Wägezelle verbunden werden. Auf einen Meßpunkt der Wägezelle der zweiten Wägeeinheit wirken damit das Gewicht des Wägeguts und eine zusätzliche Vorlast aufgrund des Gesamtgewichts der ersten Wägeeinheit und aufgrund des Gewichts der Wägeschale der zweiten Wägeeinheit und eines dazwischenliegenden Trägers. Jeweils diejenige Wägezelle, auf die aufgrund der zusätzlichen Vorlast der größte Gewichtswert wirkt, wird über einen Befestigungsblock mit einer Bodenplatte der dynamischen Waage mechanisch fest verbunden. Aufgrund des Gewichts des Wägeguts und das aller Wägeeinheiten wird insgesamt eine Gewichtskraft $F = m \cdot g$ auf die Bodenplatte übertragen.

Bei einer dynamischen Waage, die zwei Wägeeinheiten umfasst, ist die Wägezelle der zweiten Wägeeinheit, aber bei einer dynamischen Waage, die drei Wägeeinheiten umfasst, ist eine Wägezelle der dritten Wägeeinheit mit der Bodenplatte der dynamischen Waage mechanisch fest verbunden, wobei die Bodenplatte in der x/z Bezugsebene liegend angeordnet ist. Die dritte Wägeeinheit schließt wieder eine Wägezelle und eine Wägeschale ein. Die Wägezelle der dritten Wägeeinheit kann für Wägegüter dimensioniert sein, deren Gewicht das maximale Gewicht übersteigt, welches im Messbereich der Wägezelle der zweiten Wägeeinheit liegt. Das ergibt im Prinzip eine kaskadenförmige Wägezellenanordnung, bei welcher immer diejenige für ein höheres Gewicht dimensionierte Wägezelle in Schwerkraftrichtung unterhalb derer eine für ein geringeres Gewicht dimensionierte Wägezelle angeordnet ist. Die vorgenannte kaskadenförmigen Wägezellenanordnung kann eine turmartige und/oder treppenstufenartige Bauweise kombiniert mit einer seriellen Anordnung der Wägeschalen aufweisen, die nachfolgend näher erläutert wird.

Die Wägeschale der zweiten Wägeeinheit ist zur Wägeschale der ersten Wägeeinheit in Transportrichtung benachbart und die Wägeschale der dritten Wägeeinheit ist zu weiten Wägeschalen in Transportrichtung benachbart u.s.w. Im Wägepfad kann in Abständen wieder eine Transportvorrichtung für Wägegut angeordnet werden. Beim Transport von Wägegut werden die Wägeschalen nacheinander mit dem Gewicht des Wägeguts belastet. Jede Wägeschale ist so geformt, dass jeweils das Gewicht des Wägeguts von der Wägeschale zu der zugehörigen Wägezelle geleitet wird. Handelt es sich bei dem Wägegut zum Beispiel um kleinformatige Poststücke, kann deren Gewicht bereits von der ersten Wägeeinheit ermittelt werden, während sich das Wägegut noch auf der im Transportpfad ersten Wägeschale befindet und in Transportrichtung weiter transportiert wird, ohne dass eine weitere Wägeschale belastet wird. Eine solche frühe Gewichtsermittlung setzt voraus, dass die Wägezelle der ersten Wägeeinheit ein stabiles Signal liefert. Die gesamte mechanische Konstruktion der dynamischen Waage ist deshalb entsprechend steif gebaut, um Schwingungen der Wägeschale zu begrenzen bzw. möglichst schnell abklingen zu lassen. Die Wägezelle der ersten Wägeeinheit liefert aber kein stabiles Signal mehr, wenn die erforderliche Messzeit für das Wägegut, die verfügbare Messzeit des Wägegutes übersteigt, während die Wägezelle belastet wird oder wenn das Gewicht des Wägeguts bereits auf zwei benachbarte Wägeschalen verteilt einwirkt, während das Wägegut in Transportrichtung weiter transportiert wird. Die Wägezelle der zweiten Wägeeinheit liefert zu diesem Zeitpunkt noch kein stabiles Signal für einen Gewichtswert oberhalb von Null Gramm. Das ist bei einem in der Länge klein dimensionierten Wägegut auch nicht erforderlich, da noch genügend Messzeit verbleibt. Schließlich wird die zweite Wägezelle ein stabiles Signal liefern, wenn das Gewicht des Wägeguts innerhalb des Gewichtsmessbereichs der zweiten Wägezelle liegt. Im Prinzip muss nur noch ermittelt werden, welche der beiden Wiegezellen zuerst ein stabiles Signal liefert. Das gilt sinngemäß auch bei einer Anordnung mit drei oder mehreren Wägezellen. Somit sind bei einer Auswertung folgende Fälle zu unterscheiden:

a) Keine Wägezelle liefert ein stabiles Signal.
b) Die erste Wägezelle liefert ein stabiles Signal.
c) Die erste Wägezelle liefert kein stabiles Signal aber die zweite Wägezelle liefert ein stabiles Signal, wenn die Dimension des Wägeguts in Transportrichtung die Dimension des Wägeguts übersteigt, das die kleineren Abmessungen hat oder wenn das Gewicht eines Wägeguts mit kleiner Dimension in Transportrichtung einen ersten Gewichtsschwellwert übersteigt.
d) Die erste Wägezelle und die zweite Wägezelle liefern kein stabiles Signal aber die dritte Wägezelle liefert ein stabiles Signal, wenn die Dimension des Wägeguts in Transportrichtung die Dimension des Wägeguts übersteigt, das die mittleren Abmessungen hat oder wenn das Gewicht des Wägeguts mit mittleren Abmessungen einen zweiten Gewichtsschwellwert übersteigt..

Aufgrund der kaskadenförmigen Anordnung der Wägezellen und der Wirkungsrichtung der Schwerkraft, brauchen die von den einzelnen Wägeeinheiten gemessenen Gewichtswerte nicht durch aufwendige Berechnungsverfahren miteinander verrechnet werden. In Abhängigkeit vom Liefern eines stabilen Signals von den Wägezellen während des Transports des Wägeguts in die Transportrichtung erfolgt jeweils eine Umschaltung einer Auswertung der Messwerte, die von einer Wägeeinheit stammen, auf diejenigen Messwerte, die von einer weiteren Wägeeinheit stammen, deren Wägezelle ein stabiles Signal liefert.

Das Verfahren zur Erhöhung des Durchsatzes von Wägegut mit einer dynamischen Waage mit mehreren Wägeeinheiten umfasst die Schritte:

- Vorsehen einer ersten Wägeeinheit und mindestens einer zweiten Wägeeinheit, wobei die Wägeeinheiten jeweils eine Wägeschale mit Transportvorrichtung und jeweils eine Wägezelle aufweisen,
- Zuführen eines Wägeguts auf die Wägeschale der ersten Wägeeinheit, gleichzeitiges Starten der Gewichtsmessung in allen Wägezellen und Durchführung der Gewichtsmessung des Wägeguts während dessen Transports in Transportrichtung, an der Wägezellen aller Wägeeinheiten beteiligt werden,
- Zuführen eines nächstfolgenden Wägeguts auf die Wägeschale der ersten Wägeeinheit und/oder Weitertransport des Wägeguts auf die Wägeschale der zweiten Wägeeinheit zur weiteren Gewichtsmessung des Wägeguts während dessen Transports in Transportrichtung z, in Abhängigkeit von dem Signal der Wägezelle ersten Wägeeinheit und
- Weiterbetrieb der dynamischen Waage in Abhängigkeit von den Signalen der Wägezellen.

Die gemeinsame Steuereinheit führt die folgenden Schritte durch:

- Ansteuerung des Motors der Transportvorrichtung mindestens der ersten Wägeeinheit durch eine gemeinsame Steuereinheit beim Eintreffen eines Startsignals,
- Starten einer Vielzahl von Wägevorgängen im dynamischen Wägemodus durch die Steuereinheit, wenn ein am stromaufwärts gelegenen Anfang der ersten Wägeeinheit angeordneter erster Sensor ein Eintreffen der Vorderkante eines zugeführten Wägeguts signalisiert,
- Überprüfung durch die Steuereinheit, wenn ein am stromabwärts gelegenen Ende der ersten Wägeeinheit angeordneter zweiter Sensor ein Eintreffen der Vorderkante eines zugeführten Wägeguts signalisiert, ob die Messelektronik der angeschlossenen ersten Wägezelle ein stabiles Signal liefert oder noch nicht liefert, wobei bei einem stabilen Signal mehrere Messwerte für eine Messkurve vorliegen und die Messkurve nach einem ansteigenden Teil mindestens zwei Wendepunkte und zwei Umkehrpunkte aufweist, womit die Gewichtsmessung erfolgreich durchführbar ist,
- Weitertransport des Wägeguts in Transportrichtung auf die Wägeschale der zweiten Wägeeinheit,
- Abgabe eines entsprechenden Signals bei erfolgreicher Gewichtsmessung durch die Steuereinheit über eine Ein/Ausgabeeinheit an eine der ersten Wägeeinheit vorangestellten automatische Zuführstation zur Zuführung eines nachfolgenden Wägeguts zu der ersten Wägeeinheit oder
- bei nicht erfolgreicher Gewichtsmessung Fortsetzung des Wägevorgangs mit der Wägezelle der zweiten Wägeeinheit solange bis ein am stromabwärts gelegenen Ende der zweiten Wägeeinheit angeordneter dritter Sensor ein Eintreffen der Vorderkante eines zugeführten Wägeguts signalisiert, und
- Überprüfung, beim Eintreffen der Vorderkante eines zugeführten Wägeguts, ob die Messelektronik der angeschlossenen Wägezelle der zweiten Wägeeinheit ein stabiles Signal liefert oder noch nicht liefert sowie
- Feststellen, dass die Gewichtsmessung mit der zweiten Wägezelle erfolgreich beendet ist, wenn die Messelektronik der angeschlossenen zweiten Wägezelle ein stabiles Signal liefert oder
- Feststellen, dass die Gewichtsmessung mit der zweiten Wägezelle nicht erfolgreich beendet ist, wenn die Messelektronik der angeschlossenen zweiten Wägezelle kein stabiles Signal liefert,
- Umschalten der Steuereinheit von einem dynamischen Wägemodus auf einen halbdynamischen Wägemodus bei nicht erfolgreicher Gewichtsmessung und Ansteuerung des mindestens einen Motors durch die Steuereinheit, so dass der Transport des Wägeguts angehalten oder das Wägegut mindestens auf die zuletzt genutzte Wägeschale zurück transportiert und dann gewogen wird.

Die in einem dynamischen Wägemodus geschaltete Waage führt während des Transportes eines Wägeguts mindestens einen Wägevorgang durch. Die Wägegüter werden von einer stromaufwärts der Wägeschale der ersten Wägeeinheit angeordneten - nicht gezeigten - automatische Zuführstation zugeführt, nachdem die Steuereinheit über eine Ein/Ausgabeeinheit an die automatische Zuführstation ein entsprechendes Zuführungs-Signal abgeben hat.

Ein nahe dem Anfang der Wägeschale der ersten Wägeeinheit angeordneter erster Sensor registriert die Vorderkante des Wägeguts und die Wägung mit den beiden Wägezellen der ersten Wägeeinheit und der zweiten Wägeeinheit wird von der Steuereinheit der dynamischen Waage ggf. mit einer zeitlichen Verzögerung gestartet. Jedes Wägegut wird von der Transportvorrichtung zum stromabwärts gelegenen Ende der Wägeschale der ersten Wägeeinheit in Transportrichtung transportiert, ohne dass ein folgendes Wägegut dem Anfang der Wägeschale der ersten Wägeeinheit zugeführt wird. Ein Verfahren zur Steuerung der dynamischen Waage nutzt die Sensorsignale mindestens von n+1 Sensoren bei n Wägeschalen, also mindestens von drei Sensoren bei zwei Wägeschalen bzw. mindestens von vier Sensoren bei drei Wägeschalen, usw. Erreicht die Vorderkante des Wägeguts das Ende der Wägeschale der ersten Wägeeinheit wird das durch einen nahe dem Ende dieser Wägeschale angeordneten zweiten Sensor registriert. Von der Steuereinheit der dynamischen Waage wird überprüft, ob von der Wägezelle der ersten Wägeeinheit ein plausibles stabiles Signal abgegeben wird. Ist dieses der Fall, kann dieses weiterverarbeitet und das nächste Postgut kann dem System zugeführt werden. Die Verkürzung der Wägeschale der ersten Wägeeinheit führt zur Steigerung des Durchsatzes auf den Sollwert. Dies ist bei in Transportrichtung groß dimensionierten Wägegut aber nicht der Fall, zum Beispiel bei langen Poststücken. Deshalb erfolgt die weitere Wägung allein durch die Wägezelle der zweiten Wägeeinheit, bis hier ein stabiles Ergebnis vorliegt. Dann kann der Wägewert weiterverarbeitet und das nächste Wägegut dem System zugeführt werden. Erreicht die Vorderkante des Wägeguts einen nahe dem Ende der im Transportpfad letzten Wägeschale angeordneten letzten Sensor und es ist noch kein stabiler Wägewert ermittelt worden, der von der zugehörigen Wägezelle abgegeben wurde, dann wird in einen halbdynamischen Modus umgeschaltet, in welchem der Transport des Wägeguts angehalten oder das Wägegut mindestens bis auf die letzte Wägeschale zurückgefahren und im Stillstand von der zugehörigen Wägezelle, d.h. in einem halbdynamischen Wägemodus noch einmal gewogen wird. Im Stillstand ist der Weitertransport des Wägeguts mit der Transportvorrichtung unterbrochen. Nach dem Ende des Wägevorgangs wird der Transport des Wägeguts in Transportrichtung fortgesetzt.

Solche dynamischen Waagen sind für Frankiersysteme geeignet. Das Wägegut sind dann Poststücke, beispielsweise kuvertierte Briefe oder Postkarten oder Päckchen, welche anschließend frankiert werden. Die Erfindung kann sowohl für dynamische Waagen, die auf der Rückseite liegende Poststücke, als auch für dynamische Waagen, die auf der Kante stehende Poststücke transportieren, als auch für dynamische Waagen, die Poststücke in jeder beliebigen Lage dazwischen, also unter einem Winkel ungleich 0° und ungleich 90° zur Standfläche der Waage, beispielsweise unter einem Winkel von 18° zum Schwerkraftvektor transportieren können, verwendet werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1, vereinfachte Darstellung einer bekannten dynamischen Waage,

Figur 2a, Prinzipdarstellung mit einer Wägezelle und mit Blick auf die x/y Ebene,

Figur 2b, Ersatzmodell eines eingespannten Balkens,

Figur 2c, Querschnitt des Balkens,

Figur 2d-2e, Messkurven des Gewichtswertes in der Zeit,

Figur 3a, Anordnung von zwei Wägeschalen und zwei Wägezellen nach einer ersten Variante und mit Blick auf die x/y-Ebene bei Zuführung kleinformatiger Poststücke,

Figur 3b, Anordnung der Wägeschalen und Wägezellen der beiden Wägeeinheiten nach der ersten Variante und mit Blick auf die x/y-Ebene bei Zuführung mittel- bis großformatiger Poststücke,

Figur 4, Anordnung von zwei Wägeeinheiten nach einer zweiten Variante,

Figur 5, Anordnung von drei Wägeschalen und drei Wägezellen nach einer dritten Variante,

Figur 6, Anordnung von Transportvorrichtungen einer dynamischen Waage nach der ersten Variante und mit Blick auf die x/z-Ebene bei Zuführung kleinformatiger Poststücke,

Figur 7a, Anordnung von Transportvorrichtungen einer dynamischen Waage nach einer vierten Variante und mit Blick auf die x/y-Ebene bei Zuführung kleinformatiger Poststücke,

Figur 7b, Blick auf die x/z-Ebene bei Zuführung mittelgroßformatiger Poststücke,

Figur 8, Anordnung von Transportvorrichtungen für drei Wägeeinheiten nach einer fünften Variante und mit Blick auf die x/y-Ebene bei Zuführung kleinformatiger Poststücke,

Figur 9, Anordnung von Transportvorrichtungen für zwei Wägeeinheiten nach einer sechsten Variante und mit Blick auf die x/y-Ebene bei Zuführung kleinformatiger Poststücke,

Figur 10, Blockschaltbild einer dynamischen Waage mit mehreren Wägeschalen.

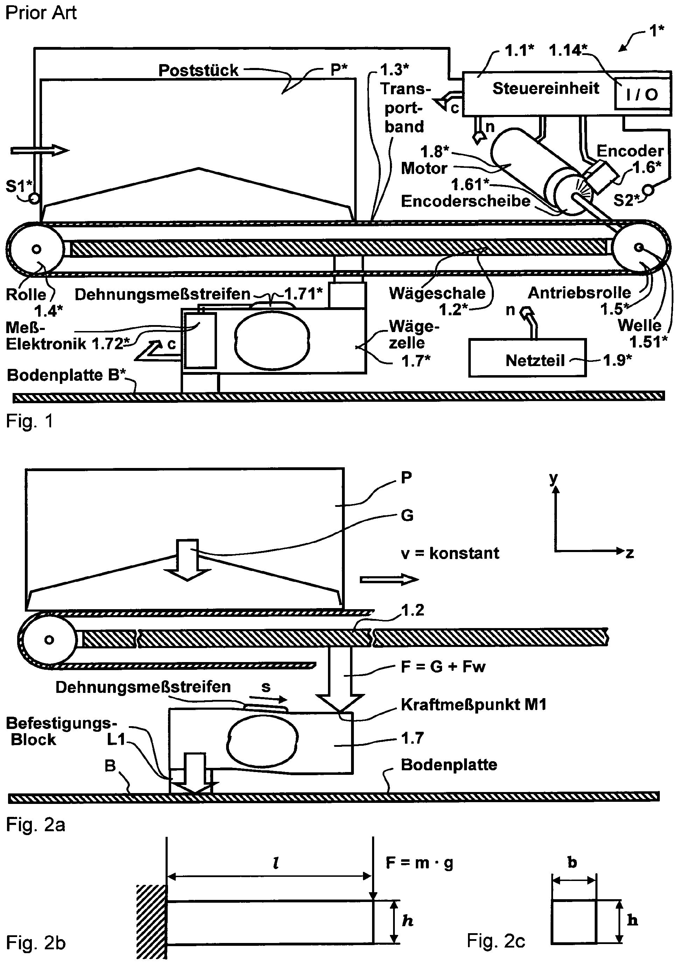

In der Figur 1 ist eine vereinfachte Darstellung einer bekannten dynamischen Waage 1 * gezeigt, welche die Anmelderin Francotyp-Postalia zusammen mit einer Frankiermaschine Centormail® in einem Postverarbeitungssystem einsetzt, welches für Mischpost geeignet ist und bei dem auf der Kante stehende flache Wiegegüter (Poststücke) zugeführt werden. Eine Steuerung 1.1* der dynamischen Waage 1* weist eine Ein-/ Ausgabeschnittstelle 1.14* auf und kann über letztere mit einer - nicht dargestellten - Frankiermaschine verbunden werden. Die Steuerung 1.1* ist mit einem ersten Sensor S1*, mit einem zweiten Sensor S2*, mit einem Encoder 1.6*, mit einer Messelektronik 1.72* einer Wägezelle 1.7* und mit einem Motor 1.8* steuerungsmäßig verbunden und wird aus einem Netzteil 1.9* gespeist. Die Wägezelle 1.7* weist Dehnungsmessstreifen 1.71 * auf, die elektrisch mit der Messelektronik 1.72* verbunden sind. Ein in Transportrichtung z zugeführtes auf der Kante stehendes Poststück P* gelangt auf ein Transportband 1.3* und wird mit einer annähernd konstanten Geschwindigkeit v = konst weiter in Transportrichtung z transportiert. Das Transportband 1.3* ist auf einer Wägeschale angeordnet und läuft auf Rollen 1.4* und 1.5*. Ein zugeführtes Poststück P* wird zwischen einer Umlenkrolle 1.4* und einer Antriebsrolle 1.5* in Transportrichtung z transportiert, wobei die Antriebsrolle 1.5* zusammen mit einer Encoderscheibe 1.61* auf einer Antriebswelle 1.51* befestigt ist. Letzte ist auf einer - nicht dargestellten - Motorwelle eines Motor 1.8* aufgesteckt und befestigt. Alternativ ist auch eine gemeinsame aus einem Stück gefertigte Welle möglich. Die Encoderscheibe 1.61* ist ein Bestandteil des Encoders 1.6*. Die Wägezelle 1.7* ist auf einer Bodenplatte B* der dynamischen Waage 1* befestigt. Ein detaillierter mechanischer Aufbau der dynamischen Waage geht aus dem europäischen Patent 907 819 B1 hervor.

Die Figur 2a zeigt eine Prinzipdarstellung mit der Wägezelle mit Blick auf die x/y-Ebene. Wenn ein Poststück P auf der Kante stehend zugeführt und mit einer konstanten Geschwindigkeit v in Transportrichtung z transportiert wird, sind keine weiteren Kräfte außer der Schwerkraft zu berücksichtigen. Für die insgesamt wirksame Gewichtskraft F gilt die Gleichung:

$$F \; = m \cdot g \; = \; G + Fw \qquad\qquad \text{mit} \qquad\qquad\qquad (1)$$

$$G \; = \; (m_P\,) \cdot g \qquad\qquad\qquad \text{und} \qquad\qquad\qquad (2)$$

$$Fw = (m_s \; + \; m_t\,) \cdot g, \qquad\qquad\qquad\qquad (3)$$

wobei g = 9,81 m/s$^2$ die Beschleunigung im Schwerkraftfeld der Erde ist. Die Masse m ergibt sich aus der Masse $m_s$ der Wägeschale und der Masse $m_t$ der Transportvorrichtung sowie der Masse $m_P$ des Poststückes P. Für das Gewicht G des Poststückes gilt auch die Gleichung:

$$G = \; F - F_W\,, \qquad\qquad\qquad\qquad (4)$$

wobei Fw diejenige Gewichtskraft der Wägeschale der Wägeeinheit und deren Transportvorrichtung ist, welche auf die Wägezelle 1.7 auch dann einwirken, wenn sich kein Wägegut auf der Wägeschale abstützt. Die Gewichtskraft mindestens der Wägeschale der Wägeeinheit bildet somit eine Vorlast.

Die Kräfte F bzw. $F_w$ wirken in Schwerkraftrichtung, d.h. entgegengesetzt zur y-Richtung, von der Wägeschale 1.2 zum Kraft-Messpunkt M1 zur Krafteinleitung in die Wägezelle 1.7. Letztere besteht aus einem steifen und leichten Balken, der beispielsweise aus Aluminium gefertigt ist. Als Wägezelle eignet sich eine Plattform-Wägezelle des Typs PW2D der Firma Hottinger Baldwin Messtechnik (HBM). Diese erlaubt bei einer Balkengröße von 31,4mm x 25,4mm x 130mm eine maximale Plattformgröße von 380mm x 380mm der Wägeschale 1.2 bei Nennlasten von Emax = 7,2 kg, 12 kg oder 18 kg bis zu 72 kg.

In den AL-Balken ist eine Öffnung orthogonal zur x/y-Ebene eingearbeitet, gebohrt, gefräst oder auf eine anderer Weise eingeformt worden. Die Gewichtskraft $F_w$ der Wägeeinheit ist bereits wirksam, wenn noch kein Poststück gewogen wird. Die Gewichtskraft F bewirkt aufgrund des Gewichts G des Poststücks eine Formänderung des AL-Balkens der Wägezelle, die durch die zentrale Öffnung im AL-Balken in den dünnen Bereichen verstärkt wirksam wird. Die Kräfte F oder $F_w$ werden über den AL-Balken auf den Befestigungsblock L1 und von dort zur Bodenplatte B weitergeleitet, wobei der AL-Balken jedoch in den dünnen Bereichen nahe der Oberfläche zur Bodenplatte (x/z-Ebene) und auf der gegenüberliegenden Messeite in s-Richtung gedehnt wird. Auf der Messeite sind Dehnungs-Messstreifen (DMS) aufgeklebt, welche die Dehnung detektieren. Die DMS weisen einen sogenannten "K-Faktor" auf, welcher die Proportionalität der Widerstandsänderung $\Delta R$ zur Dehnung $\varepsilon$ angibt.

Die Figur 2b zeigt ein Ersatzmodell eines eingespannten Balkens der Länge *l*, an dessen Ende eine Kraft F in Schwerkraftrichtung einwirkt. Im Bereich der Dehnmessstreifen in der Mitte des Balkens beträgt das Biegemoment nach Gleichung:

$$M_b = \; F \; \cdot \; l\,/\,2 \qquad\qquad\qquad\qquad (5)$$

In der Figur 2c ist ein Querschnitt des Balkens dargestellt. Daraus und aus der Gleichung (6) ergibt sich mit dem äquatorialen Widerstandmoment $W_{\ddot{a}}$, das aus dem Querschnitt der Wägezelle mit deren Breite b und deren Höhe h an der zu betrachtenden Stelle zu

$$W_{\ddot{a}} = \frac{b \cdot h^2}{6} \qquad\qquad\qquad\qquad (6)$$

berechnet wird, eine mechanische Spannung

$$\sigma_b = \frac{M_b}{W_a} = \frac{6 \cdot M_b}{b \cdot h^2} = \frac{3 \cdot F \cdot l}{b \cdot h^2} \qquad (7)$$

Mittels des Hookschen Gesetzes, das Spannung $\sigma$ und Dehnung $\varepsilon$ über den Elastizitätsmodul E des Materials verknüpft

$$\sigma = E \cdot \varepsilon , \qquad (8)$$

ergibt sich somit für die direkt mittels der DMS gemessene Dehnung mit den Geometrie- und Materialdaten der Wägezelle und der eingeleiteten Kraft

$$\varepsilon = \frac{3 \cdot l}{b \cdot h^2} \cdot \frac{F}{E} , \qquad (9)$$

die nach dem bekannten DMS-Prinzip eine Widerstandsänderung des DMS zur Folge hat. Die Dehnung $\varepsilon$ oder Stauchung wird in den dünnen Bereichen des AL-Balkens auf den DMS übertragen und im DMS tritt unter Wirkung des Proportionalitätsfaktors K eine Widerstandsänderung $\Delta R = \varepsilon \cdot K$ ein, welche dem Lastwechsel F - $F_w$ entspricht. Die durch die Dehnung hervorgerufene Änderung des elektrischen Widerstandes des DMS wird durch eine geeignete Messelektronik ausgewertet, um den Wert des Gewichtes G des Poststückes P zu ermitteln.

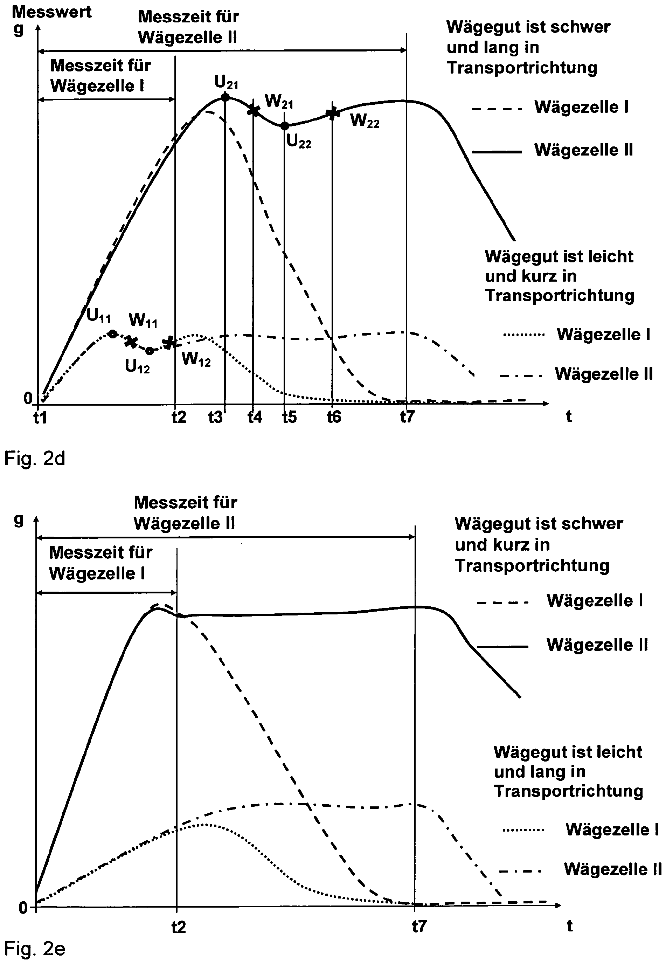

In den Figuren 2d und 2e sind Messkurven des Gewichtswertes in der Zeit dargestellt. Eine gestrichelte Messkurve gilt für Wägegut, das schwer und lang in Transportrichtung ist, beispielsweise Poststücke im DIN-Format C4 oder B4, die eine Brieflänge bis 353 mm aufweisen. Es wird dynamisch mit einer ersten Wägezelle I gewogen, wobei nur eine kurze Messzeit t2 - t1 zur Verfügung steht. Die Kurve steigt an und fällt dann wieder ab, ohne dass die Wägezelle I ein stabiles Signal abgibt. Bei einem stabilen Signal liegen mehrere Messwerte für eine Messkurve vor und die Messkurve weist nach dem ansteigenden Teil mindestens zwei Wendepunkte $W_{21}$ und $W_{22}$ sowie zwei Umkehrpunkte $U_{21}$ und $U_{22}$ auf, wie anhand einer weiteren Messkurve für das schwere und lange Wägegut verdeutlicht wird, die als durchgezogene Linie gezeichnet ist und die mit einer zweiten Wägezelle II ermittelt wird, wobei aber eine längere Messzeit t7 - t1 zur Verfügung steht. Die Kurve steigt an, bleibt dann relativ stabil und fällt dann wieder ab. Nach dem Anstieg der Messkurve wird ein erster Extremwert erreicht. Hierbei handelt es sich um ein lokales Maximum, das zu einem Zeitpunkt t3 erreicht wird und das hier als Umkehrpunkt $U_{21}$ bezeichnet wird. Im weiteren zeitlichen Verlauf ändert die Messkurve ihre Krümmung an einem ersten Wendepunkt $W_{21}$ zum Zeitpunkt t4 und erreicht einen zweiten Extremwert zum Zeitpunkt t5. Hierbei handelt es sich um ein lokales Minimum, das hier als Umkehrpunkt $U_{22}$ bezeichnet wird. Anschließend ändert die Messkurve nochmals ihre Krümmung an einem zweiten Wendepunkt $W_{22}$ zum Zeitpunkt t6. Durch die in einem engen Gewichtsbereich von kleiner als 5 % des Gewichtes des Wägegutes zwischen den Umkehrpunkten $U_{21}$ und $U_{22}$ relativ stabil bleibenden Messwerte kann die Gewichtsmessung erfolgreich abgeschlossen werden.

In der Figur 2d sind außerdem noch zwei weitere Messkurven für ein Wägegut eingezeichnet, das leicht und kurz in Transportrichtung ist, beispielsweise Poststücke im DIN-Format C6 lang, die eine mittlere Brieflänge von 229 mm aufweisen. Nach einem Anstieg zum ersten Extremwert (lokales Maximum) $U_{11}$ geht die Messkurve in eine Rechtskurve und erreicht den einem ersten Wendepunkt $W_{11}$, um in eine Linkskurve zu wechseln. Dann wird ein zweiter Extremwert (lokales Minimum) $U_{12}$ erreicht. Im weiteren zeitlichen Verlauf ändert die Messkurve ihre Krümmung wieder an einem zweiten Wendepunkt $W_{12}$. Es aus der gepunktet gezeichneten Messkurve ist offensichtlich, dass bereits die kürzere Messzeit t2 - t1 für die erste Wägezelle I für eine erfolgreiche Gewichtsmessung ausreicht. Aus der strichpunktiert gezeichneten Messkurve ist offensichtlich, dass erst recht die längere Messzeit t7 - t1 für die zweite Wägezelle II für eine erfolgreiche Gewichtsmessung ausreicht. Für Postkarten im DIN-Format C6, die nur eine Länge von 162 mm in Transportrichtung aufweisen kann eine noch kürzere Messzeit für eine erfolgreiche Gewichtsmessung ausreichen.

In der Figur 2e sind Ausnahmefälle dargestellt, wobei das Wägegut schwer und kurz in Transportrichtung oder leicht und lang in Transportrichtung ist. Eine kurze Messzeit reicht hier nicht aus, sondern nur die Wägezelle II liefert bei einer längeren Messzeit ein stabiles Signal.

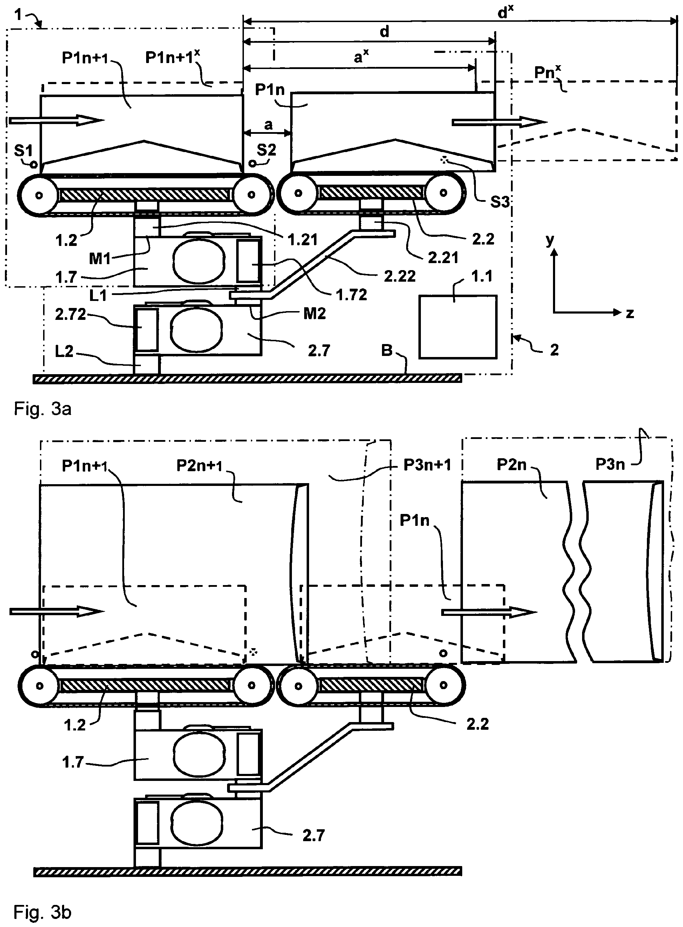

Die Figur 3a zeigt eine Anordnung von zwei Wägeschalen und zwei Wägezellen nach einer ersten Variante und mit Blick auf die z/y-Ebene bei Zuführung kleinformatiger Poststücke. Eine jede Wägeeinheit 1, 2 besteht aus einer (nicht dargestellten) Steuerung mit einer angeschlossenen Wägezelle, Sensoren, einer Wägeschale, einem (nicht dargestellten) Encoder und einem (nicht dargestellten) Motor zum Antrieb der Transportvorrichtung, wobei der Encoder, Motor und die Transportvorrichtung auf der Wägeschale der dynamischen Waage - in einer nicht dargestellten bekannten Weise - angeordnet sind. Nach einer ersten in Transportrichtung z verkürzten Wägeschale 1.2 ist eine zweite Wägeschale 2.2 in Transportrichtung z angeordnet. Die erste Wägezelle 1.7 ist direkt unter der ersten Wägeschale 1.2 angeordnet und die erste Wägeschale 1.2 ist über einen ersten Krafteinleitungsblock 1.21 mit dem Kraftmesspunkt M1 der ersten Wägezelle 1.7 verbunden. Ein Befestigungsblock L1 ist einerseits an einer vom Wägezellen-Hersteller vorbestimmten Befestigungsstelle der ersten Wägezelle 1.7 befestigt und andererseits über einen zweiten Krafteinleitungsblock eines Trägers 2.22 mit dem Kraftmesspunkt M2 der zweiten Wägezelle 2.7 verbunden.

Der Träger 2.22 erstreckt sich armartig in Transportrichtung z und weist an dem der ersten Wägezelle gegenüberliegenden Ende einen Adapterblock 2.21 auf, der mit der zweiten Wägeschale 2.2 mechanisch verbunden ist. Der Adapterblock 2.21 der zweiten Wägezelle 2.7 sollte in Transportrichtung z vom Befestigungsblock L2 der zweiten Wägezelle 2.7 nicht mehr als die Hälfte der maximalen Plattformgröße beabstandet sein. Der Träger 2.22 überträgt eine von der zweiten Wägeschale 2.2 gelieferte Gewichtskraft zum Kraftmesspunkt M2 der zweiten Wägezelle 2.7. Auch der Balken der ersten Wägezelle 1.7 überträgt eine von der ersten Wägeschale 1.2 gelieferte Gewichtskraft zum Kraftmesspunkt M2 der zweiten Wägezelle 2.7. Der Befestigungsblock L2 ist einerseits an einer vom Wägezellen-Hersteller vorbestimmten Befestigungsstelle der zweiten Wägezelle 2.7 fest angebracht und andererseits mit der Bodenplatte B mechanisch verbunden. Der mit der zweiten Wägeschale 2.2 mechanisch verbundene Adapterblock 2.21 liegt in Transportrichtung z von dem Befestigungsblock L2 der zweiten Wägezelle 2.7 entfernt und zwar weiter entfernt, als der Befestigungsblock L2 der zweiten Wägezelle 2.7 von dem mit der ersten Wägeschale 1.2 mechanisch verbundenen Krafteinleitungsblock 1.21. Beide Wägezellen können gleichartig sein.

Auf die zweite Wägezelle 2.7 wirkt aber eine höhere Vorlast ein, als auf die erste Wägezelle 1.7. Dadurch wird durch die zweite Wägezelle 2.7 ein anderer Abschnitt im gesamten Messbereich genutzt, als durch die erste Wägezelle 1.7. Die erste Wägezelle 1.7 weist einen elektromagnetisch abgeschirmten Raum mit einer Messelektronik 1.72 auf. Auch die zweite Wägezelle 2.7 weist einen elektromagnetisch abgeschirmten Raum mit einer Messelektronik 2.72 auf. Die vorgenannten Messelektroniken und Sensoren sind in nicht gezeigter Weise elektrisch mit der (nicht dargestellten) Steuerung verbunden, um Messsignale zu empfangen und um ggf. die vorgenannten Messelektroniken zu steuern.

Ein Poststück P1 n ist auf der zweiten Wägeschale 2.2 auf der Kante stehend dargestellt und wird in Transportrichtung z (weißer Pfeil) transportiert. Ein nachfolgend zugeführtes Poststück P1 n+1 ist auf der ersten Wägeschale 1.2 ebenfalls auf der Kante stehend dargestellt und wird in Transportrichtung z (weißer Pfeil) transportiert. Der Abstand d zwischen der Vorderkante des Poststückes P1 n auf der zweiten Wägeschale 2.2 und der Vorderkante nachfolgend zugeführten Poststücks P1 n+1, welches auf der ersten Wägeschale 1.2 steht, ist klein gegenüber einem Abstand $d^x$. Der Abstand $d^x$ wurde zu Vergleichszwecken eingezeichnet und ergibt sich bei einer bekannten gemäß Figur 1 aufgebauten dynamischen Waage mit nur einer Wägeeinheit. Der Durchsatz D der dynamischen Waage ergibt sich aus der Anzahl der Poststücke pro Zeiteinheit. Mit einer gegebenen Transportgeschwindigkeit v und einem Abstand d von Vorderkante zu Vorderkante der Poststücke P ergibt sich nach Gleichung:

$$D = v / d . \hspace{5cm} (10)$$

Auch ein Abstand a zwischen der Hinterkante des kleinformatigen Poststückes P1 n, das sich auf der zweiten Wägeschale 2.2 abstützt und der Vorderkante nachfolgend zugeführten kleinformatigen Poststücks P1n-1, welches sich auf der ersten Wägeschale 1.2 abstützt, ist klein gegenüber einem Abstand $a^x$, der sich bei einer bekannten gemäß Figur 1 aufgebauten dynamischen Waage mit nur einer Wägeeinheit zwischen der Hinterkante des kleinformatigen Poststückes $P1n^x$ (gestrichelt) und der Vorderkante nachfolgend zugeführten kleinformatigen Poststücks $P1n+1^x$ (gestrichelt) ergäbe. Ein solcher Abstand $a^x$ ergibt sich aber auch, wenn kein zweiter Sensor S2 vorhanden wäre und eine mit zwei Wägeschalen ausgerüstete dynamische Wage, wie bisher weiterbetrieben worden wäre. Die erste in Transportrichtung z verkürzte Wägeschale 1.2 und die in Transportrichtung z angeordnete zweite Wägeschale 2.2 konnten nur aufgrund eines zusätzlich veränderten Verfahrens zum Betreiben der dynamischen Waage eine Durchsatzerhöhung ergeben. Dazu ist es aber erforderlich, dass neben einem ersten Sensor S1 am stromaufwärts gelegenen Anfang der Transportvorrichtung der ersten Wägeschale 1.2 ein zweiter Sensor S2 am stromabwärts gelegenen Ende der Transportvorrichtung der ersten Wägeschale 1.2 und ein dritter Sensor S3 (gestrichelt dargestellt) nahe dem stromabwärts gelegenen Ende der Transportvorrichtung der zweiten Wägeschale 2.2 angeordnet ist. Der zweite Sensor S2 signalisiert ein Eintreffen der Vorderkante eines zugeführten Poststücks P1 n, aufgrund dessen die Steuerung 1.1 überprüft, ob die Elektronik 1.72 der angeschlossenen ersten Wägezelle 1.7 ein stabiles Signal liefert oder noch nicht liefert.

Die Gewichtsmessung war erfolgreich, wenn die Steuerung 1.1 feststellt, dass die Elektronik 1.72 der angeschlossenen ersten Wägezelle 1.7 ein stabiles Signal liefert. Das Poststück P1n wird weiter in Transportrichtung z transportiert und ein nachfolgendes Poststück P1n+1 wird der ersten Wägeschale 1.2 zugeführt. Wenn jedoch die Gewichtsmessung nicht erfolgreich war, signalisiert der dritte Sensor S3 ein Eintreffen der Vorderkante eines zugeführten Poststücks P1 n, woraufhin die Steuerung überprüft, ob die Elektronik 2.72 der angeschlossenen zweiten Wägezelle 2.7 ein stabiles Signal liefert oder noch nicht liefert. Wenn die Steuerung feststellt, dass die Elektronik 2.72 der angeschlossenen zweiten Wägezelle 2.7 ein stabiles Signal liefert, dann war die Gewichtsmessung mit der zweiten Wägezelle 2.7 erfolgreich. Anderenfalls wird das Poststück zurücktransportiert und vom dynamischen Wiegen auf ein halbdynamischen Wiegen umgeschaltet.

Die Figur 3b zeigt die Anordnung der Wägeschalen und Wägezellen der beiden Wägeeinheiten nach der ersten Variante und mit Blick auf die z/y-Ebene bei Zuführung mittelgroßformatiger Poststücke P2n und P2n+1 sowie großformatiger Poststücke P3n und P3n+1 (Strichpunktlinie). Im Vergleich mit der Zuführung kleinformatiger Poststücke (gestrichelt gezeichnet) P1n und P1n+1, für welche die vorgenannte Anordnung der beiden Wägeschalen 1.2 und 2.2 sowie der beiden übereinander stehend angeordneten Wägezellen 1.7 und 2.7 eine Erhöhung des Durchsatz von Poststücken ermöglicht, resultiert bei Zuführung mittel- bis großformatiger Poststücke zur dynamischen Waage keine Durchsatzerhöhung, weil mittel- bis großformatige Poststücke nach deren Zuführung nur immer auf beiden Wägeschalen aufliegen.

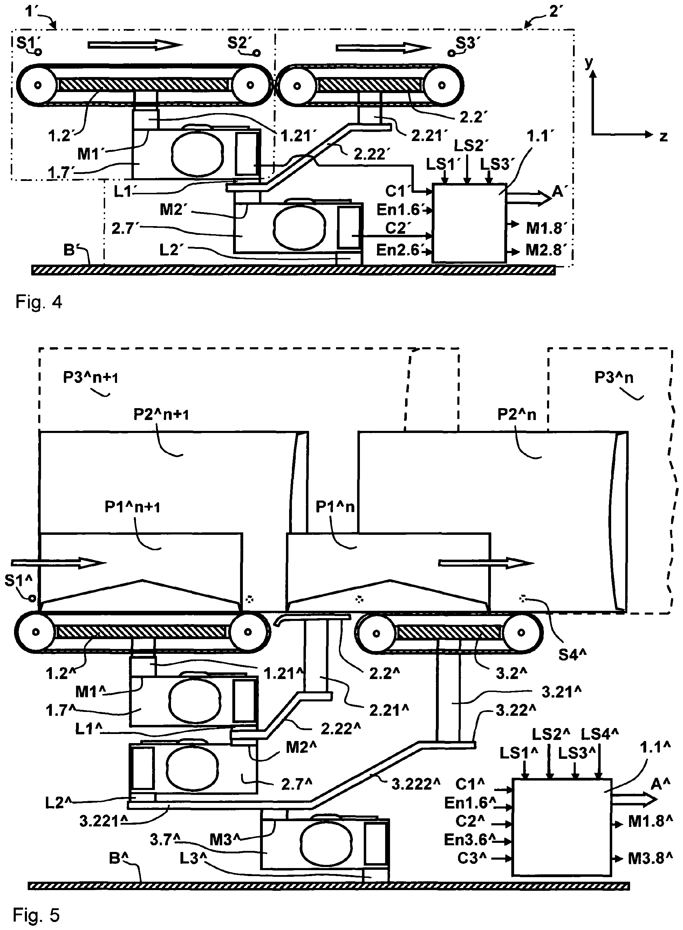

In der Figur 4 ist eine Anordnung von zwei Wägeeinheiten 1' und 2' nach einer zweiten Variante dargestellt, in der die beiden Wägeschalen 1.2' und 2.2' in Transportrichtung angeordnet sowie die beiden Wägezellen 1.7' und 2.7' treppenstufenartig übereinander stehend kaskadiert sind. Die Sensoren S1' und S2' sowie S3' wieder sind am Anfang und am Ende der Transportvorrichtung der ersten Wägeschale 1.2' sowie am Ende der Transportvorrichtung der zweiten Wägeschale 2.2' in Transportrichtung z angeordnet. Es ist vorgesehen, dass eine Steuereinheit 1.1' eingangsseitig einerseits - in nicht gezeigter Weise - über eine Leitung für ein Signal LS1' mit dem ersten Sensor S1', über eine Leitung für ein Signal LS2' mit dem zweiten Sensor S2', über eine Leitung für ein Signal LS3' mit dem dritten Sensor S3' und andererseits - in nicht gezeigter Weise - über Leitungen für die Signale En1.6' und En2.6' mit dem Encoder (nicht gezeigt) der Transportvorrichtung der Wägeschale 1.2' der ersten Wägeeinheit und mit dem Encoder (nicht gezeigt) der Transportvorrichtung der Wägeschale 2.2' der zweiten Wägeeinheit sowie ausgangsseitig - in nicht gezeigter Weise - über Leitungen für die Signale M1.8' und M2.8' mit einem ersten Motor (nicht gezeigt) der Transportvorrichtung der Wägeschale 1.2' der ersten Wägeeinheit und einem zweiten Motor (nicht gezeigt) der Transportvorrichtung der Wägeschale 2.2' der zweiten Wägeeinheit elektrisch verbunden ist. Die Steuereinheit 1.1' ist eingangsseitig über Leitungen für die Messignale C1' und C2' mit der ersten Wägezelle 1.7' und mit der zweiten Wägezelle 2.7' elektrisch verbunden und gibt ausgangsseitig ein digitales Ausgangssignal A' mit dem gemessenen Gewichtswert des Wägeguts aus. Nach der ersten in Transportrichtung z verkürzten Wägeschale 1.2' ist die zweite Wägeschale 2.2' in Transportrichtung z angeordnet. Die erste Wägezelle 1.7' ist direkt unter der ersten Wägeschale 1.2' angeordnet und die erste Wägeschale 1.2' ist über einen ersten Krafteinleitungsblock 1.21' mit dem Kraftmesspunkt M1' der ersten Wägezelle 1.7' verbunden. Ein Befestigungsblock L1' ist einerseits an einer vom Wägezellen-Hersteller vorbestimmten Befestigungsstelle der ersten Wägezelle 1.7' und andererseits über einen zweiten Krafteinleitungsblock eines Trägers 2.22' mit dem Kraftmesspunkt M2' der zweiten Wägezelle 2.7' verbunden. Der Träger 2.22' erstreckt sich armartig in Transportrichtung z und weist am gegenüberliegenden Ende einen Adapterblock 2.21' auf, der mit der zweiten Wägeschale 2.2' mechanisch verbunden ist. Ein Befestigungsblock L2' ist einerseits an einer vom Wägezellen-Hersteller vorbestimmten Befestigungsstelle der zweiten Wägezelle 2.7' und andererseits mit der Bodenplatte B' mechanisch verbunden. Der Balken der ersten Wägezelle 1.7' erstreckt sich ausgehend vom Kraftmesspunkt M2' der zweiten Wägezelle 2.7' armartig in der zur Transportrichtung z entgegengesetzten Richtung. Der Befestigungsblock L2' der zweiten Wägezelle 2.7' ist dabei von dem mit der ersten Wägeschale 1.2' mechanisch verbundenen ersten Krafteinleitungsblock 1.21' in Transportrichtung z entfernt und weiter entfernt, als der mit der zweiten Wägeschale 2.2' mechanisch verbundene Adapterblock 2.21' von dem Befestigungsblock L2' der zweiten Wägezelle 2.7'. Die Dimension der ersten Wägeschale 1.2' ist gegenüber der maximal möglichen Plattformgröße entsprechend der Dimension des kleinformatigen Poststücks in Transportrichtung z verkürzt. Der Befestigungsblock L2' der zweiten Wägezelle 2.7' sollte in Transportrichtung z vom ersten Krafteinleitungsblock 1.21' nicht mehr als die Hälfte der maximalen Plattformgröße beabstandet sein.

Die Wägeschale der bekannten dynamischen Waage nach Fig. 1 ist bereits in ihrer Abmessung in Transportrichtung z insgesamt für einen hohen Durchsatz von großformatigen Poststücke P3n und P3n+1 dimensioniert. Durch eine Anordnung einer ersten Wägeeinheit 1, 1' und einer zweiten Wägeeinheit 2, 2' nach einer ersten Variante nach Fig. 3a, 3b oder nach einer zweiten Variante nach Fig. 4 wurde die dynamische Wage auch für hohen Durchsatz von kleinformatigen Poststücke P1n und P1n+1 oder P1n' und P1n+1' dadurch dimensioniert, dass die Wägeschalen 1.2, 2.2 oder 1.2', 2.2' der Wägeeinheiten in der Transportrichtung z verkürzt und zueinander benachbart ausgeführt sowie in der gleichen oberen Ebene angeordnet sind. Mit der Figur 5 wurde nun eine Ausführungsvariante geschaffen, die auch eine Erhöhung des Durchsatzes von mittelgroßformatigen Poststücken ermöglicht.

In der Figur 5 ist eine Anordnung von drei Wägeschalen und drei Wägezellen nach einer dritten Variante dargestellt. Nach der ersten in Transportrichtung z verkürzten Wägeschale 1.2^ ist eine in Transportrichtung z verkürzte zweite Wägeschale 2.2^ und danach eine in Transportrichtung z verkürzte dritte Wägeschale 3.2^ angeordnet. Es kommen mindestens vier Sensoren S1^ bis S4^ zum Einsatz. Die erste und dritte Wägeschale 1.2^ und 3.2^ weisen jeweils eine Transportvorrichtung auf. Die zweite Wägeschale 2.2^ weist aber keine Transportvorrichtung auf und ist zwischen der ersten und dritten Wägeschale 1.2^ und 3.2^ angeordnet. Die erste Wägezelle 1.7^ ist turmartig über der zweiten Wägezelle 2.7^, aber die zweite Wägezelle 2.7^ ist treppenstufenartig über der dritten Wägezelle 3.7^ übereinander stehend angeordnet. Der mit der ersten Wägeschale 1.2^ mechanisch verbundene Krafteinleitungsblock 1.21^ ist von dem Befestigungsblock L3^ der dritten Wägezelle 3.7^ in einer zur Transportrichtung z entgegengesetzten Richtung weiter entfernt, als von dem mit der zweiten Wägeschale 2.2^ mechanisch verbundenen Krafteinleitungsblock 2.21^. Der mit der dritten Wägeschale 3.2^ mechanisch verbundene Krafteinleitungsblock 3.21^ ist von dem Befestigungsblock L2^ der zweiten Wägezelle 2.7^ in Transportrichtung z weiter entfernt, als von dem Befestigungsblock L3^ der dritten Wägezelle 3.7^. Die erste Wägezelle 1.7^ ist direkt unter der ersten Wägeschale 1.2^ angeordnet und der Krafteinleitungsblock 1.21^ wirkt auf den Kraftmesspunkt M1^ der ersten Wägezelle 1.7^. Der Befestigungsblock L1^ ist einerseits mit der ersten Wägezelle 1.7^ und andererseits über einem Krafteinleitungsblock eines Trägers 2.22^ mit dem Kraftmesspunkt M2^ der zweiten Wägezelle 2.7^ verbunden. Der Träger 2.22^ weist am gegenüberliegenden Ende einen Krafteinleitungsblock 2.21^ auf, der mit der zweiten Wägeschale 2.2^ mechanisch verbunden ist. Der Balken der ersten Wägezelle 1.7^ überträgt die von der ersten Wägeschale 1.2^ eingeleitete Gewichtskraft zum Kraftmesspunkt M2^ der zweiten Wägezelle 2.7^ auch dann, wenn der zulässige Gewichtsmessbereich der ersten Wägezelle 1.7^ durch das über die erste Wägeschale 1.2^ auf der Kante stehend transportierte Poststück P2^n+1 überschritten wird. Der Träger 2.22^ überträgt die von der zweiten Wägeschale 2.2^ eingeleitete Gewichtskraft ebenfalls zum Kraftmesspunkt M2^ der zweiten Wägezelle 2.7^. Somit kann ein mittelgroßformatiges Poststück, welches sich während des Transports auf der ersten Wägeschale 1.2^ und auf der zweiten Wägeschale 2.2^ abstützt, mittels der zweiten Wägezelle 2.7^ gewogen werden. Ein Befestigungsblock L2^ ist einerseits mit der zweiten Wägezelle 2.7^ und andererseits über einem Krafteinleitungsblock eines weiteren Trägers 3.22^ mit dem Kraftmesspunkt M3^ der dritten Wägezelle 3.7^ verbunden, deren Befestigungsblock L3^ mit der Bodenplatte B^ mechanisch verbunden ist. Der weitere Träger 3.22^ weist am gegenüberliegenden Ende den Krafteinleitungsblock 3.21^ auf, der mit der dritten Wägeschale 3.2^ mechanisch verbunden ist. Der Balken der zweiten Wägezelle 2.7^ überträgt die von der ersten Wägeschale 1.2^ und zweiten Wägeschale 2.2^ eingeleitete Gewichtskraft des Poststücks und die von der ersten und zweiten Wägeeinheit verursachte Gewichtskraft über ein Teilstück 3.221^ des weiteren Trägers 3.22^ zum Kraftmesspunkt M3^ der dritten Wägezelle 3.7^ auch dann, wenn der zulässige Gewichtsmessbereich der zweiten Wägezelle 2.7^ durch das über die zweite Wägeschale 2.2^ auf der Kante stehend transportierte Poststück P2^n+1 überschritten wird. Ein zweites Teilstück 3.222^ des weiteren Träger 3.22^ überträgt die von der dritten Wägeschale 3.2^ eingeleitete Gewichtskraft ebenfalls zum Kraftmesspunkt M3^ der dritten Wägezelle 3.7^. Somit kann ein großformatiges Poststück, welches sich während des Transports auf der ersten Wägeschale 1.2^, zweiten Wägeschale 2.2^ und der dritten Wägeschale 3.2^ abstützt, mittels der dritten Wägezelle 3.7^ gewogen werden.

Die Sensoren S1^ und S2^ sowie S3^ und S4^ sind jeweils wieder am Anfang und am Ende der Transportvorrichtung der ersten Wägeschale 1.2^ sowie am Anfang und am Ende der Transportvorrichtung der dritten Wägeschale 3.2^ in Transportrichtung z angeordnet. Die gestrichelt gezeichneten Sensoren S2^, S3^ und S4^ sind durch Poststücke verdeckt. Die Poststücke P1^n und P1^n+1 sind kleinformatig. Die Poststücke P2^n und P2^n+1 sind mittelgroßformatig und die Poststücke P3^n und P3^n+1 sind großformatig. Eine Durchsatzerhöhung ist somit aufgrund der in Transportrichtung z verkürzten zweiten Wägeschale 2.2^ ebenfalls bei mittelgroßformatigen Poststücken und damit im gesamten Mischpostbereich erzielbar.

Es ist vorgesehen, dass der vierte Sensor S4^ nahe dem stromabwärts gelegenen Ende der Transportvorrichtung der Wägeschale 3.2^ der dritten Wägeeinheit 3^ angeordnet ist und dass eine Steuereinheit 1.1^ eingangsseitig einerseits - in nicht gezeigter Weise - über eine Leitung für ein Signal LS1^ mit dem ersten Sensor S1^, über eine Leitung für ein Signal LS2^ mit dem zweiten Sensor S2^, über eine Leitung für ein Signal LS3^ mit dem dritten Sensor S3^, über eine Leitung für ein Signal LS4^ mit dem vierten Sensor S4^ und andererseits - in nicht gezeigter Weise - über Leitungen für die Signale En1.6^ und En3.6^ mit dem Encoder (nicht gezeigt) der Transportvorrichtung der Wägeschale 1.2^ der ersten Wägeeinheit und mit dem Encoder (nicht gezeigt) der Transportvorrichtung der Wägeschale 3.2^ der dritten Wägeeinheit sowie ausgangsseitig - in nicht gezeigter Weise - über Leitungen für die Signale M1.8^ und M3.8^ mit einem ersten Motor der Transportvorrichtung der Wägeschale 1.2^ der ersten Wägeeinheit und einem dritten Motor der Transportvorrichtung der Wägeschale 3.2^ der dritten Wägeeinheit elektrisch verbunden ist.

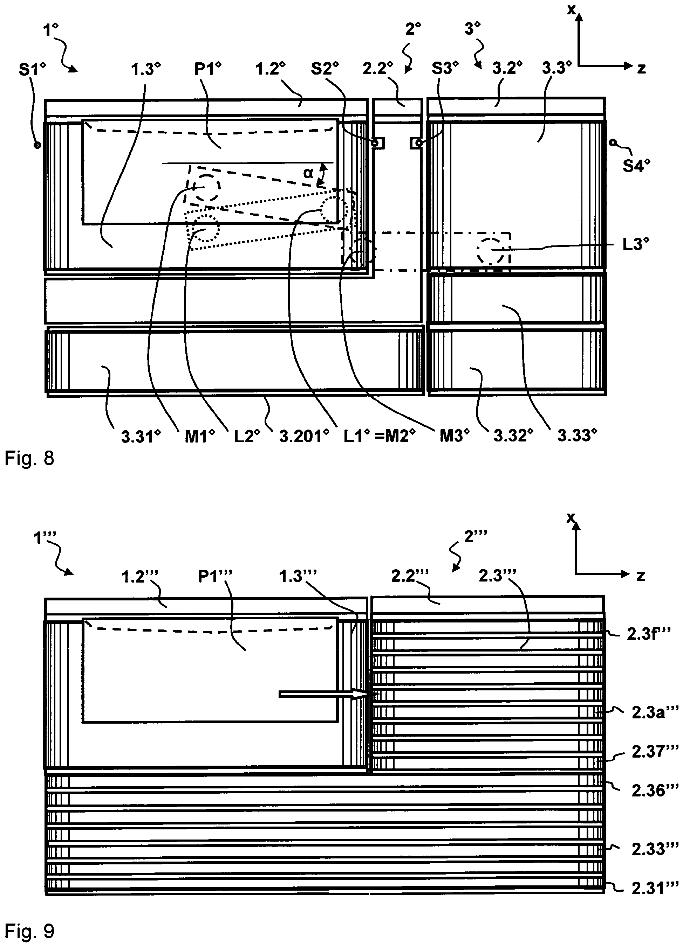

Die Steuereinheit 1.1^ ist eingangsseitig über Leitungen für die Messsignale C1^, C2^ und C3^ mit der ersten Wägezelle 1.7^, mit der zweiten Wägezelle 2.7^ und mit der dritten Wägezelle 3.7^ elektrisch verbunden und gibt ausgangsseitig ein digitales Ausgangssignal A^ mit dem gemessenen Gewichtswert des Wägeguts aus. Die gleiche Schaltungsanordnung ist auch für die in der Fig. 8 gezeigten Anordnung nach einer fünften Variante vorgesehen.

Während bei der ersten, zweiten und vierten Variante im wesentlichen Wägezellen von gleichem Aufbau und mit der gleichen Nennlast, beispielsweise für ein maximales Gewicht G = 18 kg, eingesetzt werden, können im Ausführungsbeispiel nach der dritten oder fünften Variante auch Wägezellen von gleichem Aufbau und mit unterschiedlichen Nennlasten, zum Beispiel für die maximalen Gewichte G = 7,5 kg, G = 12 kg und G = 18 kg eingesetzt werden. Dabei kann die erste Wägezelle mit der geringsten Nennlast G = 7,5 kg und die dritte Wägezelle mit einer höheren Nennlast G = 18 kg ausgelegt sein. Das erfordert jedoch eine Überlastsicherung nach allen Richtungen mindestens für die erste Wägezelle, welche nur aus Gründen der Übersichtlichkeit nicht eingezeichnet wurde.

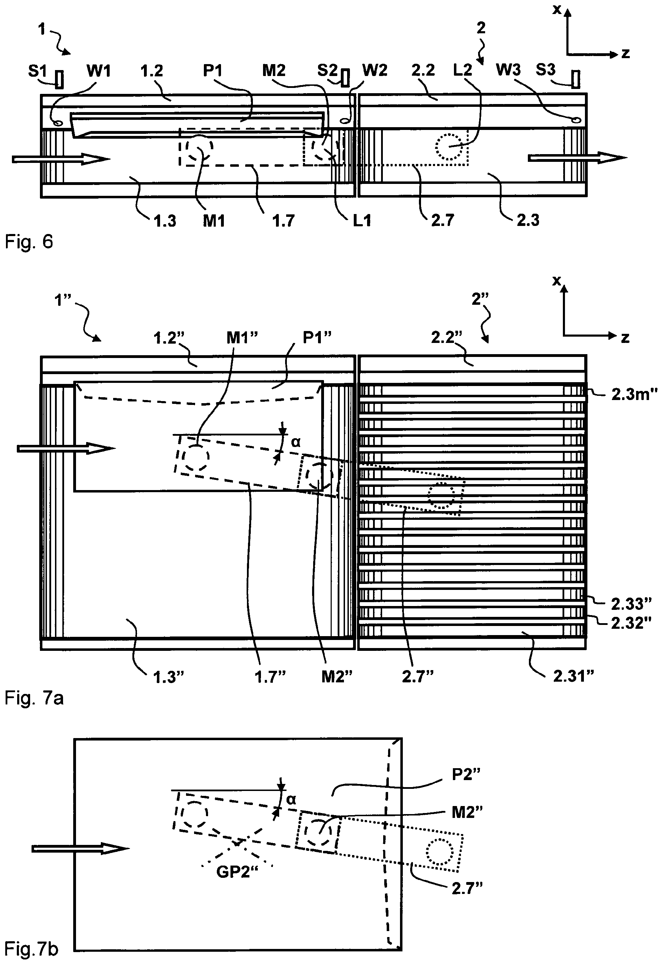

Die Figur 6 zeigt die Anordnung von Transportvorrichtungen einer dynamischen Waage 1 nach der ersten Variante und mit Blick auf die x/z-Ebene bei Zuführung eines kleinformatigen Poststücks P1, das auf der Kante stehend zugeführt und mittels des Transportbandes 1.3 der Transportvorrichtung während des Wägens in Transportrichtung z (weißer Pfeil) weiter transportiert wird. Die erste Wägeschale 1.2 weist eine zum Beispiel im Winkel von 18° zur Vertikalen geneigte Seitenwand auf, die sich parallel zur Rückseite der dynamischen Waage erstreckt und an welcher sich das Poststücks P1 abstützt. Die Seitenwand hat für die Sensoren S1 und S2 eingeformte Fensteröffnungen W1 und W2. Eine in eine Seitenwand der zweiten Wägeschale 2.2 eingeformte Fensteröffnung W3 ist für den poststromabwärts angeordneten dritten Sensor S3 vorgesehen. Unter dem Transportband 1.3 einer Transportvorrichtung der ersten Wägeschale 1.2 ist die - von oben nicht sichtbare - erste Wägezelle 1.7 gestrichelt eingezeichnet, um deren Lage zu verdeutlichen. Deren Kraftmesspunkt M1 liegt mittig unter der ersten Wägeschale 1.2 und deren Befestigungsblock L1 liegt in der Nähe der poststromabwärts gerichteten Ende der ersten Wägeschale 1.2 und ist direkt mit dem Kraftmesspunkt M2 der zweiten Wägezelle 2.7 mechanisch verbunden. Unter dem Transportband 2.3 einer Transportvorrichtung der zweiten Wägeschale 2.2 ist die - von oben nicht sichtbare - zweite Wägezelle 2.7 gestrichelt eingezeichnet, um deren Lage zu verdeutlichen. Deren Befestigungsblock L2 liegt in der Nähe der Mitte der zweiten Wägeschale 2.2. Die Anordnung der beiden Wägezellen liegt im Wesentlichen parallel zur Transportrichtung z.

Die Figur 7a zeigt die Anordnung von Transportvorrichtungen einer dynamischen Waage 1" nach einer vierten Variante und mit Blick auf die x/z-Ebene bei Zuführung eines kleinformatigen Poststücks P1", das auf der Rückseite liegend der ersten Wägeschale 1.2" zugeführt wurde und mittels des Transportbandes 1.3" der Transportvorrichtung während des Wägens in Transportrichtung z (weißer Pfeil) weiter transportiert wird. Unter dem Transportband 1.3" der Transportvorrichtung der ersten Wägeschale 1.2" ist die - von oben nicht sichtbare - erste Wägezelle 1.7" gestrichelt eingezeichnet, um deren Lage zu verdeutlichen. Deren Kraftmesspunkt M1 liegt nahe der Mitte des kleinformatigen Poststücks P1", dass vom dem Transportband 1.3" der ersten Wägeschale 1.2" transportiert wird. Der Befestigungsblock L1" der ersten Wägezelle 1.7" liegt in der Nähe der poststromabwärts gerichteten Ende der ersten Wägeschale 1.2" und ist direkt mit dem Kraftmesspunkt M2" der zweiten Wägezelle 2.7" mechanisch verbunden. Unter einer Transportvorrichtung der zweiten Wägeschale 2.2" ist die - von oben nicht sichtbare - zweite Wägezelle 2.7" gestrichelt eingezeichnet, um deren Lage zu verdeutlichen. Deren Befestigungsblock L2" liegt in der Nähe der Mitte der zweiten Wägeschale 2.2". Die in Richtung von dem Kraftmesspunkt M1 auf den Befestigungsblock L2" der zweiten Wägezelle 2.7" weisende Anordnung der beiden Wägezellen schließt einen spitzen Winkel $\alpha$ mit Transportrichtung z ein. Alternativ dazu kann ein Winkel ab dem Kraftmesspunkt M2" der zweiten Wägezelle 2.7" auch verschieden zum Winkel $\alpha$ vorgesehen sein, wobei der Winkel in Abhängigkeit von den technischen Daten der Wägezellen inklusive der maximalen Plattformgröße und der vom Hersteller vorgegeben Grenzlast bei maximaler Exzentrizität sowie der Dimensionen der Poststücke gewählt wird. Bei auf der Seite liegenden Poststücken ist es vorteilhaft, wenn ein relativ breites Transportband 1.3" - in nicht gezeigter Weise -, wie das Transportband 2.3" in eine Vielzahl von schmalen Transportbändern 2.31", 2.32", 2.33" bis 2.3m" unterteilt wird, wobei die schmalen Transportbänder in y-Richtung benachbart angeordnet sind.

Die Figur 7b gibt einen Blick auf die x/z-Ebene bei Zuführung eines mittelgroßformatigen Poststücks P2", das auf der Rückseite liegend zugeführt wurde. Beim Transport eines mittelgroßformatigen Poststücks in Transportrichtung (weißer Pfeil) gelangt dessen Schwerpunkt GP2" über den Kraftmesspunkt M2" der zweiten Wägezelle 2.7".

Die Figur 8 zeigt die Anordnung von Transportvorrichtungen für drei Wägeeinheiten 1◇, 2◇, 3◇ mit den Sensoren S1◇, S2◇, S3◇, S4◇ und mit den Wägeschalen 1.2◇, 2.2◇ und 3.2◇ nach einer fünften Variante und mit Blick auf die x/z-Ebene bei Zuführung eines kleinformatigen Poststücks P1◇. Die erste Wägeschale 1.2◇ und die dritte Wägeschale 3.2◇ weisen unterschiedlich breite und lange Transportbänder 1.3◇ und 3.3◇, 3.31◇, 3.32◇, 3.33◇ auf. An der dritten Wägeschale 3.2◇ kann hilfsweise eine weitere Sub-Wägeschale 3.201◇ montiert sein, die das Transportband 3.31◇ trägt. Nur die zweite Wägeschale 2.2◇ benötigt kein Transportband und ist plattenförmig als Winkelstück ausgebildet. Alternativ dazu kann ein relativ breites Transportband - in nicht gezeigter Weise - wieder in eine Vielzahl von schmalen Transportbändern unterteilt werden, wobei die schmalen Transportbänder in y-Richtung benachbart angeordnet sind. Die Anordnung der ersten Wägezelle (gestrichelt) erfolgt nach Fig. 8 in einem zwischen dem Kraftmesspunkt M1◇ und dem Befestigungsblock L1◇ liegenden Bereich und liegt in der x/z-Ebene im Winkel $\alpha$ zur Transportrichtung z, wie bereits in der Fig. 7 gezeigt wurde. Bei der zwischen dem Kraftmesspunkt M2◇ und dem Befestigungsblock L2◇ angeordneten zweiten Wägezelle (gepunktet) ist ein Winkel in der x/z-Ebene ersichtlich, der verschieden zum Winkel $\alpha$ ist, wobei der jeweilige Winkel in Abhängigkeit von den technischen Daten der Wägezellen und des Formates des Wäguts gewählt wird. Die Anordnung der dritten Wägezelle (Strichpunktlinie) erfolgt im Bereich zwischen dem Kraftmesspunkt M3◇ und dem Befestigungsblock L3◇ und liegt in der x/z-Ebene im wesentlichen parallel zur Transportrichtung z. Ein - nicht gezeigter - Träger stellt die erforderlichen Kraftkopplung zwischen der zweiten und der dritten Wägezelle her. Alternativ dazu kann für einen anderen Zweck auch die Anordnung der drei Wägezellen auf verschiedene Weise winkelig zueinander und zur Transportrichtung z ausgerichtet sein.

Die Figur 9 zeigt die Anordnung von Transportvorrichtungen für zwei Wägeeinheiten 1''', 2''' mit den Wägeschalen 1.2''', 2.2''' nach einer sechsten Variante und mit Blick auf die x/z-Ebene bei Zuführung eines kleinformatigen Poststückes P1''', das auf der Rückseite liegend der ersten Wägeschale 1.2''' zugeführt wurde und mittels des Transportbandes 1.3''' der Transportvorrichtung während des Wägens in Transportrichtung z (weißer Pfeil) weiter transportiert wird. Ein relativ breites Transportband 1.3''' kann - in nicht gezeigter Weise - wie das Transportband 2.3''' in eine Vielzahl von schmalen Transportbändern 2.31''', ..., 2.33''' bis 2.3f''' unterteilt werden, wobei die schmalen Transportbänder in x-Richtung benachbart angeordnet sind. Die schmalen Transportbänder 2.31''' ..., 2.33''' bis 2.36''' sind in Transportrichtung z länger ausgebildet, als die schmalen Transportbänder 2.37''', ..., 2.3a''' bis 2.3f'''.

Alternativ ist auch eine andere Ausbildung für andere Wägegüter möglich. Auch können Mittel für eine alternative Ausbildung der Transportvorrichtung eingesetzt werden.

Die Messergebnisse der zweiten Wägezelle können zur Plausibilitätsprüfung der Ergebnisse der ersten Wägezelle verwendet werden. Ebenso ist eine Mittlung der Ergebnisse beider Wägezellen denkbar, solange sich das Poststück nur auf der Wägeschale der ersten Wägeeinheit befindet. Die Messergebnisse einer dritten bzw. n-ten Wägezelle können zur Plausibilitätsprüfung der Ergebnisse der zweiten bzw. (n-1)-ten Wägezelle verwendet werden.

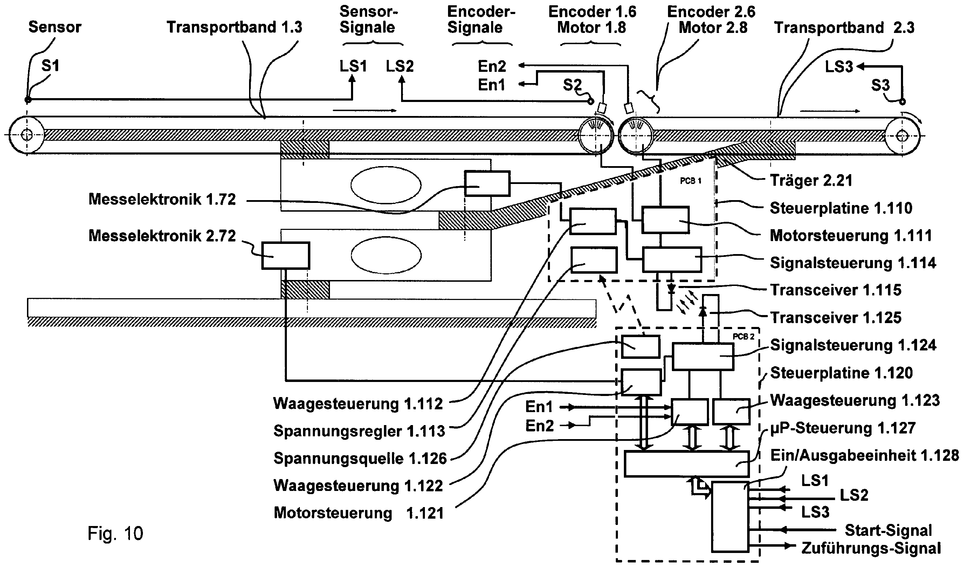

In der Figur 10 ist ein Blockschaltbild einer dynamischen Waage mit mehreren Wägeschalen. Auf der ersten Wägeschale ist eine Transportvorrichtung montiert, welche einen ersten Encoder 1.6, einen ersten Motor 1.8, Umlenkrollen und weitere - nicht gezeigte - Mittel zur Führung, Straffung und Ausrichtung eines ersten Transportbandes 1.3 aufweist. Es ist vorgesehen, dass die erste Wägezelle mit einer unterschiedlichen Vorlast betrieben wird und ggf. eine unterschiedliche Nennlast gegenüber der mindestens zweiten Wägezelle aufweist. Damit die Wägungen durch die mitgewogenen Bauteile nicht zu stark verfälscht werden, wird die Anzahl der mechanischen Verbindungen zwischen den nicht gewogenen (auf der Bodenplatte stehenden) und den gewogenen Bauteilen dadurch minimiert, dass am Träger 2.21, der die zweite Wägeschale und die auf dieser montierten Transportvorrichtung aufnimmt, eine erste Steuerplatine 1.110 angebracht wird, die lediglich durch die zweite Wägezelle mitgewogen wird. Die erste Steuerplatine 1.110 ist an einer Montagestelle angebracht, welche aufgrund der Wahl der Montagestelle kurze elektrische Verbindungen zum Ansteuern des ersten Motors 1.8 und zum Empfangen der Messsignale von der ersten Wägezelle erlaubt. Die auf der zweiten Wägeschale montierte Transportvorrichtung weist einen zweiten Encoder 2.6, einen zweiten Motor 2.8, Umlenkrollen und weitere - nicht gezeigte - Mittel zur Führung, Straffung und Ausrichtung eines zweiten Transportbandes 2.3 auf.

Die Ausgänge einer Messelektronik 1.72 der ersten Wägezelle sind mit den Messsignal-Eingängen einer Waagesteuerung 1.112 der ersten Steuerplatine 1.110 verbunden. Die Messelektronik 1.72 der ersten Wägezelle wird von der ersten Steuerplatine 1.110 mit einer Gleichspannung gespeist.

Eine Motorsteuerung 1.111 der ersten Steuerplatine 1.110 hat über ein Kabel sowohl eine elektrische Verbindung zum Ansteuern des ersten Motors 1.8 als auch eine elektrische Verbindung zum Ansteuern des zweiten Motors 2.8.

Die Waagesteuerung 1.112 und die Motorsteuerung 1.111 sind einerseits zu deren Ansteuerung mit einer Signalsteuerung 1.114 der ersten Steuerplatine 1.110 verbunden.

Die Signalsteuerung 1.114 der ersten Steuerplatine 1.110 dient andererseits zur Übermittlung der Messsignale über einen ersten Transceiver 1.115 zum Transceiver 1.125 einer zweiten Steuerplatine 1.120.

Die erste Steuerplatine 1.110 wird - in nicht gezeigter Weise - durch eine geregelte Gleichspannung versorgt, die ungeregelt beispielsweise über zwei Versorgungsdrähte zu einem Spannungsregler 1.113 der ersten Steuerplatine 1.110 von einer ersten Spannungsquelle 1.126 geliefert wird, die extern der ersten Steuerplatine 1.110 angeordnet ist. Auf der ersten Steuerplatine 1.110 wird diese ungeregelte Gleichspannung in eine geregelte Gleichspannung zur Versorgung der ersten Wägezelle und der ersten Motorsteuerung 1.111 zur Ansteuerung der Motoren 1.8 und 2.8 gewandelt.

Die erste Spannungsquelle 1.126 ist Bestandteil einer zweiten Steuerplatine 1.120 und liefert auch eine geregelte Gleichspannung an weitere Baugruppen. Die Steuerplatine umfasst mindestens eine Mikroprozessorsteuerung 1.127, eine Ein-/Ausgabeeinheit 1.128, eine zweite Waagesteuerung 1.122, eine dritte Waagesteuerung 1.123, eine Motorsteuerung 1.121 und eine Signalsteuerung 1.124. An der Signalsteuerung 1.124 der zweiten Steuerplatine 1.120 ist ein zweiter Transceiver 1.125 angeschlossen, der mit dem ersten Transceiver 1.115 der ersten Steuerplatine 1.110 in kommunikativer Verbindung steht.

Die Ausgänge einer Messelektronik 2.72 der zweiten Wägezelle sind mit den Messsignal-Eingängen der zweiten Waagesteuerung 1.122 der zweiten Steuerplatine 1.120 verbunden. Die Messelektronik 2.72 der zweiten Wägezelle wird von der zweiten Steuerplatine 1.120 mit einer Gleichspannung gespeist.

Die zweite Waagesteuerung 1.122, die dritte Waagesteuerung 1.123 und die Motorsteuerung 1.121 sind mit der zweiten Signalsteuerung 1.124 steuerungs- und meßsignalmäßig verbunden.

Die Ausgänge der beiden Encoder 1.6 und 2.6 sind an die Eingänge der zweiten Motorsteuerung 1.121 über elektrische Verbindungsleitungen für die Signale En1 und En2 angeschlossen.

An die Eingänge der Ein-/Ausgabeeinheit 1.128 sind elektrische Verbindungsleitungen für ein Startsignal und für die Signale LS1, LS2 und LS3 von den Ausgängen der Sensoren S1, S2 und S3 angeschlossen. An einen Ausgang der Ein/Ausgabeeinheit sind elektrische Verbindungsleitungen für ein an die automatische Zuführstation zu übertragendes Zuführungs-Signal angeschlossen.

Die Wägesignale sowie Informationen zur Motoransteuerung werden via Transceiver optisch, zum Beispiel via Infrarot, von der Signalsteuerung 1.114 der ersten Steuerplatine 1.110 und zu der Signalsteuerung 1.124 der zweiten Steuerplatine 1.120 übertragen.

Die erste Motorsteuerung 1.111 der ersten Steuerplatine 1.110 verarbeitet die Versorgungsspannung und die Ansteuerungsinformation zu passenden Ansteuerspannungen für die beiden Motoren 1.8 und 2.8. Die Berechnung der Ansteuerungsinformationen erfolgt mittels der zweiten Motorsteuerung 1.121 in einem Regelkreis durch Auswertung der zu den beiden Motoren zugehörigen Encodersignale En1 und En2 der zweiten Motorsteuerung 1.121.

Während die Ansteuerung der ersten Wägezelle ebenfalls auf der ersten Steuerplatine 1.110 erfolgt, erfolgt die Ansteuerung der zweiten Wägezelle über die zweite Waagesteuerung 1.122 der zweiten Steuerplatine 1.120. Die Mikroprozessorsteuerung 1.127 bildet eine übergeordnete Logik für die Wägeelektroniken der Steuerplatinen 1.110 und 1.120. Diese führt die Gesamtansteuerung und Gesamtauswertung der Wägeeinheiten aus. In Abhängigkeit von Lichtschrankensignalen, die von den Sensoren geliefert werden und bei Erreichen von vorbestimmten Positionen durch das Wägegut ausgelöst werden, werden hiermit Wägevorgänge gestartet und ermittelte Wägeergebnisse angefordert und weiterverarbeitet. Weiterhin wird über die übergeordnete Logik die Einstellung von Wägeparametern gesteuert. Die Motor-, Waage- und Signalsteuerungen der Steuerplatinen 1.110 und 1.120 empfangen und senden Signale. Sie sorgen für die Kennzeichnung und Übertragung von Motorsteuersignalen und Wägesteuersignalen, die mittels Transceiver, vorzugsweise optischen Sendern und Empfängern, zwischen den Steuerplatinen 1.110 und 1.120 erfolgt.

Alternativ sind auch Transceiver für Funk- oder induktive Übertragung oder für eine andere Art einer drahtlosen Übertragung einsetzbar.

Bei einer in Schwerkraftrichtung funktional kaskadierten Anordnung der Wägezellen kann eine alternative teilweise Nebeneinanderanordnung der Wägezellen vorgesehen sein, bei der die Formgestaltung der Wägeschalen und Träger dafür sorgen, dass sich die von den Wägeschalen ausgehende Kräfte in Schwerkraftrichtung in einer gewünschten Weise additiv überlagern, ehe diese auf eine Wägezelle einwirken. Auf die an der Bodenplatte montierten Wägezelle wirken die größten Kräfte ein, schon aufgrund der höheren Vorlast. Die Schwingungsperiode der im Transportpfad letzten Wägeschale wird dadurch vergrößert gegenüber der Schwingungsperiode der im Transportpfad ersten Wägeschale. Das wird vorteilhaft zur Eliminierung von Störungen durch Erschütterungen eingesetzt. Die gleichzeitig für alle Wägezellen gestarteten Gewichtsmessungen erlauben eine Durchführung einer Plausibilitätsprüfung der Messergebnisse der Wägezellen während der Auswertung der Messergebnisse in der gemeinsamen Steuereinheit.

Wenn im vorstehenden Ausführungsbeispielen auch nur solche aus einem Balken mit DMS bestehende Wägezellen genannt wurden, sollen dadurch andere Wägezellen nicht ausgeschlossen werden, die auf einem anderen Wägeprinzip basieren, wie zum Beispiel auf dem Prinzip der Kraftkompensation oder auf dem Prinzip einer schwingenden Seite beruhen.

## Patentansprüche

1. Dynamische Waage, mit einer Vielzahl an Wägeeinheiten, wobei jede der Wägeeinheiten mindestens mit einer Wägezelle und mit einer Wägeschale ausgestattet ist, wobei die Wägeschale in einer oberen Ebene liegt und die Wägezelle zwischen der oberen Ebene und einer in Schwerkraftrichtung von der oberen Ebene entfernten unteren Ebene angeordnet ist, mit Sensoren und mit einer Transportvorrichtung für den Transport eines Wägeguts während des Wägens in eine Transportrichtung, wobei die Transportvorrichtung einen Motor (1.8) zum Antrieb der vorgenannten Transportvorrichtung und einen Encoder (1.6) aufweist und wobei die Sensoren (S1, S2) und der Encoder (1.6) mit den Eingängen einer Steuereinheit (1.1) und der Motor (1.8) zum Antrieb der vorgenannten Transportvorrichtung mit den Ausgängen der Steuereinheit (1.1) elektrisch verbunden sind, **gekennzeichnet dadurch,**

   - **dass** eine erste Wägeeinheit (1, 1', 1^, 1", 1$^\diamond$, 1''') und dass mindestens eine zweite Wägeeinheit (2, 2', 2^, 2", 2$^\diamond$, 2'''') mit einer seriell im Transportpfad benachbarten Anordnung einer zweiten Wägeschale (2.2, 2.2', 2.2^, 2.2", 2.2$^\diamond$, 2.2''') zu einer ersten Wägeschale (1.2, 1.2', 1.2^, 1.2", 1.2$^\diamond$, 1.2''') bei gleichzeitiger in Schwerkraftrichtung funktional kaskadierter Anordnung der Wägezellen vorgesehen sind, so dass das Gewicht des Wägeguts und das Gesamtgewicht der ersten Wägeeinheit und das Gewicht mindestens einer weiteren Wägeschale der mindestens zweiten Wägeeinheit auf der Wägezelle der mindestens zweiten Wägeeinheit als Vorlast lastet, wobei die mindestens zweite Wägeeinheit mit ihrer unteren Ebene auf einer x/z-Bezugsebene liegend befestigt ist und
   - **dass** eine gemeinsame Steuereinheit (1.1, 1.1', 1.1^) der dynamischen Waage zu einem in allen Wägezellen gleichzeitig vollzogenen Starten der Wägevorgänge im dynamischen Wägemodus, zur Ansteuerung aller mit der Steuereinheit elektrisch verbundenen Motore (1.8, 1.8', 1.8^) in Abhängigkeit von Signalen der Sensoren (S1, S1', S1^, S2, S2', S2^) und des Encoders zur Bestimmung und Regelung der Transportgeschwindigkeit und zur Auswertung der Gewichtsmessungen vorgesehen ist und dass die dynamische Waage in Abhängigkeit von den Signalen der Wägezellen gesteuert wird.

2. Dynamische Waage nach Anspruch 1, **gekennzeichnet dadurch, dass** die Wägeschale einer n-ten Wägeeinheit im Transportpfad in der Transportrichtung z an der letzten Stelle angeordnet ist und dass eine zu der im Transportpfad zuletzt angeordneten Wägeschale zugehörige Wägezelle, über einen Befestigungsklotz (L2, L2' oder L3, L3') mit einer Bodenplatte (B) der dynamischen Waage mechanisch fest verbunden ist, wobei die Bodenplatte in der x/z-Bezugsebene liegend angeordnet ist.

3. Dynamische Waage nach Anspruch 1, **gekennzeichnet** t dadurch, dass die erste Wägeeinheit (1, 1', 1^, 1", 1$^\diamond$, 1"') zur schnellen Messung eines kleineren Gewichts des Wägegutes vorgesehen ist, als die mindestens zweite Wägeeinheit (2, 2', 2^, 2", 2$^\diamond$, 2"').

4. Dynamische Waage, nach Anspruch 1, **dadurch gekennzeichnet, dass** die Transportvorrichtung der ersten Wägeeinheit (1, 1', 1^, 1", 1$^\diamond$, 1"') ein Transportband (1.3, 1.3', 1.3^, 1.3", 1.3$^\diamond$, 1.3"') und die Transportvorrichtung einer dritten Wägeeinheit (3^, 3$^\diamond$) ein Transportband (3.3^, 3.3$^\diamond$) aufweist.

5. Dynamische Waage, nach Anspruch 1, **dadurch gekennzeichnet, dass** die Transportvorrichtung der ersten Wägeeinheit (1, 1', 1^, 1", 1$^\diamond$, 1"') ein Transportband (1.3, 1.3', 1.3^, 1.3", 1.3$^\diamond$, 1.3"') und die Transportvorrichtung der zweiten Wägeeinheit (2, 2', 2", 2"') ein Transportband (2.3, 2.3', 2.3", 2.3"') aufweist.

6. Dynamische Waage, nach Anspruch 1, **dadurch gekennzeichnet, dass** die Wägeschalen der Wägeeinheiten in der Transportrichtung verkürzt und zueinander benachbart ausgeführt sowie in der gleichen oberen Ebene angeordnet sind, dass mindestens eine erste Wägeschale (1.2, 1.2', 1.2^, 1.2", 1.2$^\diamond$, 1.2"') der zueinander benachbarten Wägeschalen die Transportvorrichtung für Wägegut aufweist, dass die Wägezellen jeder der Wägeeinheiten in Schwerkraftrichtung derart kaskadiert angeordnet sind, dass das Gewicht des Wägeguts, das Gesamtgewicht der ersten Wägeeinheit und das Gewicht mindestens einer zweiten Wägeschale (2.2, 2.2', 2.2^, 2.2", 2.2$^\diamond$, 2.2"') auf der zweiten Wägezelle (2.7, 2.7', 2.7^, 2.7", 2.7$^\diamond$, 2.7"') der mindestens zweiten Wägeeinheit (2, 2', 2^, 2", 2$^\diamond$, 2"') lastet, wobei die erste Wägeeinheit die erste Wägeschale (1.2, 1.2', 1.2^, 1.2", 1.2$^\diamond$, 1.2"') und die zugehörige Transportvorrichtung umfasst, sowie dass die erste Wägeschale (1.2, 1.2', 1.2^, 1.2", 1.2$^\diamond$, 1.2"') der ersten Wägeeinheit vor der in Transportrichtung liegenden zweiten Wägeschale (2.2, 2.2', 2.2^, 2.2", 2.2$^\diamond$, 2.2"') der zweiten Wägeeinheit angeordnet ist, dass der erste Sensor (S1, S1') stromaufwärts der Transportvorrichtung der ersten Wägeschale (1.2), dass der zweite Sensor (S2, S2') stromabwärts der Transportvorrichtung der ersten Wägeschale (1.2, 1.2') und ein dritter Sensor (S3) nahe dem stromabwärts gelegenen Ende der Transportvorrichtung der zweiten Wägeschale (2.2, 2.2') angeordnet ist und dass die Steuereinheit (1.1, 1.1') programmiert ist:

- beim Eintreffen eines Startsignals einen Motor der Transportvorrichtung mindestens einer ersten Wägeeinheit (1, 1', 1^, 1", 1$^\diamond$, 1"') anzusteuern,
- eine Vielzahl von Wägevorgängen im dynamischen Wägemodus zu starten, wenn der erste Sensor (S1, S1') ein Eintreffen der Vorderkante eines zugeführten Wägeguts signalisiert,
- zu überprüfen, wenn der zweite Sensor (S2, S2') ein Eintreffen der Vorderkante eines zugeführten Wägeguts signalisiert, ob die Elektronik (1.72) der angeschlossenen Wägezelle (1.7) der ersten Wägeeinheit ein stabiles Signal liefert oder noch nicht liefert, wobei bei einem stabilen Signal mehrere Messwerte für eine Messkurve vorliegen und die Messkurve nach einem ansteigenden Teil mindestens zwei Wendepunkte und zwei Umkehrpunkte aufweist, womit die Gewichtsmessung erfolgreich durchführbar ist,
- mindestens einen Motor (1.8, 1.8', 2.8, 2.8') anzusteuern, damit das Wägegut weiter in Transportrichtung z auf die Wägeschale (2.2) der zweiten Wägeeinheit transportiert wird und
- bei erfolgreicher Gewichtsmessung eine Ein/Ausgabeeinheit (1.128) der gemeinsamen Steuereinheit zur Abgabe eines entsprechenden Signals an eine der ersten Wägeeinheit vorangestellten automatische Zuführstation zur Zuführung eines nachfolgenden Wägeguts zu der Wägeschale (1.2, 1.2') der ersten Wägeeinheit zu veranlassen oder
- anderenfalls den Wägevorgang mit der Wägezelle (2.7) der zuletzt genutzten zweiten Wägeeinheit solange fortzusetzen bis der dritte Sensor (S3) ein Eintreffen der Vorderkante eines zugeführten Wägeguts signalisiert,
- beim Eintreffen der Vorderkante eines zugeführten Wägeguts am Ende der Transportvorrichtung der zweiten Wägeschale zu überprüfen, ob die Elektronik (2.72) der angeschlossenen Wägezelle (2.7) der zweiten Wägeeinheit ein stabiles Signal liefert oder noch nicht liefert sowie
- entweder die Gewichtsmessung mit der Wägezelle (2.7) der zweiten Wägeeinheit erfolgreich zu beenden, wobei die Elektronik (2.72) der angeschlossenen Wägezelle (2.7) der zweiten Wägeeinheit ein stabiles Signal liefert, oder
- anderenfalls ein Umschalten der dynamischen Waage vom dynamischen Wägemodus auf einen halbdynamischen Wägemodus vorzunehmen, wobei im halbdynamischen Wägemodus der mindestens eine Motor (1.8, 1.8', 2.8, 2.8') so angesteuert wird, dass der Transport des Wägeguts angehalten oder auf das Wägegut mindestens auf die zuletzt genutzte Wägeschale (1.2) zurück transportiert und dann gewogen wird.

7. Dynamische Waage, nach den Ansprüchen 1 bis 4, **dadurch gekennzeichnet, dass** ein vierter Sensor (S4^, S4◇) nahe dem stromabwärts gelegenen Ende der Transportvorrichtung der Wägeschale (3.2^, 3.2◇) der dritten Wägeeinheit (3^, 3◇) angeordnet ist und dass die Steuereinheit (1.1^, 1.1◇) eingangsseitig einerseits über eine Leitung für ein Signal (LS1^, LS1◇) mit dem ersten Sensor (S1^, S1◇), über eine Leitung für ein Signal (LS2^, LS2◇) mit dem zweiten Sensor (S2^, S2◇), über eine Leitung für ein Signal (LS3^, LS3◇) mit dem dritten Sensor (S3^, S3◇), über eine Leitung für ein Signal (LS4^, LS4◇) mit dem vierten Sensor (S4^, S4◇) und andererseits über Leitungen für die Signale (En1.6^, En1.6◇ und En3.6^, En3.6◇) mit dem Encoder der Transportvorrichtung der Wägeschale (1.2^,1.2◇) der ersten Wägeeinheit (1^, 1◇) und mit dem Encoder der Transportvorrichtung der Wägeschale (3.2^, 3.2◇) der dritten Wägeeinheit (3^, 3◇) sowie ausgangsseitig über Leitungen für die Signale (M1.8^, M1.8◇ und M3.8^, M3.8◇) mit einem ersten Motor der Transportvorrichtung der Wägeschale (1.2^, 1.2◇) der ersten Wägeeinheit (1^, 1◇) und mit einem dritten Motor der Transportvorrichtung der Wägeschale (3.2^ 3.2◇) der dritten Wägeeinheit (3^, 3◇) elektrisch verbunden ist.

8. Dynamische Waage, nach den Ansprüchen 1 - 3 und 5, **dadurch gekennzeichnet, dass** die Steuereinheit (1.1, 1.1', 1.1", 1.1''') eingangsseitig einerseits über eine Leitung für ein Signal (LS1, LS1', LS1", LS1''') mit dem ersten Sensor (S1, S1', S1", S1'''), über eine Leitung für ein Signal (LS2, LS2', LS2", LS2''') mit dem zweiten Sensor (S2, S2', S2", S2'''), über eine Leitung für ein Signal (LS3, LS3', LS3", LS3''') mit dem dritten Sensor (S3, S3', S3", S3''') und andererseits über Leitungen für die Signale (En1.6, En1.6', En1.6", En1.6''') und En2.6, En2.6', En2.6", En2.6''') mit dem Encoder der Transportvorrichtung der Wägeschale der ersten Wägeeinheit (1, 1', 1", 1''') und mit dem Encoder der Transportvorrichtung der Wägeschale der zweiten Wägeeinheit (2, 2', 2", 2''') sowie ausgangsseitig über Leitungen für die Signale (M1.8, M1.8', M1.8", M1.8''' und M2.8, M2.8', M2.8", M2.8''') mit einem ersten Motor der Transportvorrichtung der Wägeschale der ersten Wägeeinheit (1, 1', 1", 1''') und mit einem zweiten Motor der Transportvorrichtung der Wägeschale der zweiten Wägeeinheit (2, 2', 2", 2''') elektrisch verbunden ist.

9. Dynamische Waage, nach Anspruch 1, 6 und 8, **dadurch gekennzeichnet, dass** die Messergebnisse der zweiten Wägezelle zur Plausibilitätsprüfung der Ergebnisse der ersten Wägezelle verwendet werden.

10. Dynamische Waage, nach Anspruch 1 und 7, **dadurch gekennzeichnet, dass** die Messergebnisse der dritten Wägezelle zur Plausibilitätsprüfung der Ergebnisse der zweiten Wägezelle verwendet werden.

11. Dynamische Waage, nach einem der vorgenannten Ansprüche, **dadurch gekennzeichnet, dass** die erste Wägezelle und die mindestens zweite Wägezelle mit einer unterschiedlichen Vorlast betrieben werden, dass an einem Träger (2.21), der die zweite Wägeschale (2.2) und die auf dieser montierten Transportvorrichtung aufnimmt, eine erste Steuerplatine (1.110) angebracht wird, die lediglich durch die zweite Wägezelle (2.7) mitgewogen wird, dass die erste Steuerplatine (1.110) an einer Montagestelle angebracht ist, welche aufgrund der Wahl der Montagestelle kurze elektrische Verbindungen zum Ansteuern des ersten Motors (1.8) und zum Empfangen der Messignale von der ersten Wägezelle und/oder eine drahtlose Verbindung erlaubt.

12. Verfahren zum Betreiben der dynamische Waage, mit einer Vielzahl an Wägeeinheiten, nach Anspruch 1, **gekennzeichnet durch** die Schritte:

   • Vorsehen einer ersten Wägeeinheit (1, 1') und mindestens einer zweiten Wägeeinheit (2, 2'), wobei die Wägeeinheiten jeweils eine Wägeschale mit Transportvorrichtung und jeweils eine Wägezelle aufweisen,
   • Zuführen eines Wägeguts auf die Wägeschale der ersten Wägeeinheit (1, 1'), gleichzeitiges Starten der Gewichtsmessung in allen Wägezellen und Durchführung der Gewichtsmessung des Wägeguts während dessen Transports in Transportrichtung z, wobei an der Gewichtsmessung die Wägezellen aller Wägeeinheiten von Anfang an beteiligt werden,
   • Zuführen eines nächstfolgenden Wägeguts auf die Wägeschale der ersten Wägeeinheit (1, 1') und/oder Weitertransport des Wägeguts auf die Wägeschale der zweiten Wägeeinheit (2, 2') zur weiteren Gewichtsmessung des Wägeguts während dessen Transports in Transportrichtung z, in Abhängigkeit von dem Signal der Wägezelle ersten Wägeeinheit (1, 1') und
   • Weiterbetrieb der dynamischen Waage in Abhängigkeit von den Signalen der Wägezellen.

13. Verfahren nach Anspruch 12, **gekennzeichnet durch** die Schritte:

- Ansteuerung des Motors (1.8, 1.8') der Transportvorrichtung mindestens der ersten Wägeeinheit (1, 1') **durch** eine gemeinsame Steuereinheit beim Eintreffen eines Startsignals,
- Starten einer Vielzahl von Wägevorgängen im dynamischen Wägemodus durch die Steuereinheit, wenn ein am stromaufwärts gelegenen Anfang der ersten Wägeeinheit angeordneter erster Sensor (S1, S1') ein Eintreffen der Vorderkante eines zugeführten Wägeguts signalisiert,
- Überprüfung **durch** die Steuereinheit, wenn ein am stromabwärts gelegenen Ende der ersten Wägeeinheit (1, 1') angeordneter zweiter Sensor (S2, S2') ein Eintreffen der Vorderkante eines zugeführten Wägeguts signalisiert, ob die Messelektronik der angeschlossenen ersten Wägezelle (1.7, 1.7') ein stabiles Signal liefert oder noch nicht liefert, wobei bei einem stabilen Signal mehrere Messwerte für eine Messkurve vorliegen und die Messkurve nach einem ansteigenden Teil mindestens zwei Wendepunkte und zwei Umkehrpunkte aufweist, womit die Gewichtsmessung erfolgreich durchführbar ist,
- Weitertransport des Wägeguts in Transportrichtung auf die Wägeschale der zweiten Wägeeinheit (2, 2'),
- Abgabe eines entsprechenden Signals **durch** die Steuereinheit (1.1, 1.1') über eine Ein/Ausgabeeinheit (1.128) an eine der ersten Wägeeinheit (1, 1') vorangestellten automatischen Zuführstation zur Zuführung eines nachfolgenden Wägeguts zu der ersten Wägeeinheit oder
- bei nicht erfolgreicher Gewichtsmessung Fortsetzung des Wägevorgangs mit der zweiten Wägezelle solange bis ein am stromabwärts gelegenen Ende der zweiten Wägeeinheit angeordneter dritter Sensor ein Eintreffen der Vorderkante eines zugeführten Wägeguts signalisiert, und
- Überprüfung, beim Eintreffen der Vorderkante eines zugeführten Wägeguts, ob die Messelektronik der angeschlossenen zweiten Wägezelle (2.7, 2.7') ein stabiles Signal liefert oder noch nicht liefert sowie
- Feststellen, dass die Gewichtsmessung mit der zweiten Wägezelle (2.7, 2.7') erfolgreich beendet ist, wenn die Messelektronik der angeschlossenen zweiten Wägezelle (2.7, 2.7') ein stabiles Signal liefert oder
- Feststellen, dass die Gewichtsmessung mit der zweiten Wägezelle nicht erfolgreich beendet ist, wenn die Messelektronik der angeschlossenen zweiten Wägezelle (2.7, 2.7') kein stabiles Signal liefert,
- Umschalten der Steuereinheit (1.1, 1.1') von einem dynamischen Wägemodus auf einen halbdynamischen Wägemodus bei nicht erfolgreicher Gewichtsmessung und Ansteuerung des mindestens einen Motors **durch** die Steuereinheit, so dass der Transport des Wägeguts angehalten oder das Wägegut auf die zuletzt genutzte Wägeschale zurück transportiert und dann gewogen wird.

14. Verfahren nach den Ansprüchen 12 bis 13, **gekennzeichnet durch** eine Durchführung einer Plausibilitätsprüfung der Messergebnisse der Wägezellen.

## Claims

1. Dynamic balance with a plurality of weighing units, each weighing unit being equipped with at least one weighing cell and a weighing pan, wherein the weighing pan is located on an upper level and the weighing cell is arranged between the upper level and a lower level that is spaced from the upper level in the direction of gravity, having sensors and a transport device for the transport of an item to be weighed in a transport direction during the weighing, wherein the transport device has a motor (1.8) for driving said transport device and an encoder (1.6) and wherein the sensors (S1, S2) and the encoder (1.6) are electrically connected with the inputs of a control unit (1.1) and the motor (1.8) for driving said transport device is electrically connected with the outputs of the control unit (1.1), **characterized in**

   - **that** a first weighing unit (1, 1', 1^, 1 ", 1$^\diamond$, 1"') and that at least a second weighing unit (2, 2', 2^, 2", 2$^\diamond$, 2"') with an arrangement of a second weighing pan (2.2, 2.2', 2.2^, 2.2", 2.2$^\diamond$, 2.2"') serially adjacent in the transport path to a first weighing pan (1.2, 1.2', 1.2^, 1.2", 1.2$^\diamond$, 1.2"') with a simultaneous functionally cascaded arrangement of the weighing cells in the direction of gravity are provided so that the weight of the item to be weighed and the total weight of the first weighing unit and the weight of at least one further weighing pan of the at least second weighing unit weigh on the weighing cell of the at least second weighing unit as initial load, wherein the at least second weighing unit is fixed lying with its lower level on an x/y reference level; and
   - **that** a common control unit (1.1, 1.1', 1.1^) of the dynamic balance is provided for starting the weighing processes simultaneously in all weighing cells in the dynamic weighing mode, for triggering all motors (1.8, 1.8', 1.8^) electrically connected with the control unit, depending on the signals of the sensors (S1, S1', S1^, S2, S2', S2^) and of the encoder, for determining and controlling the transport speed and for analyzing the weight measurements and that the dynamic balance is controlled depending on the signals of the weighing cells.

2. Dynamic balance according to Claim 1, **characterized in that** the weighing pan of an $n^{th}$ weighing unit is arranged on the transport path in transport direction z at the last place and that a weighing cell pertaining to the weighing pan arranged as the last one on the transport path is firmly mechanically connected by means of a fixing block (L2, L2' or L3, L3') with a bottom plate (B) of the dynamic balance, the bottom plate being arranged lying on the x/y reference level.

3. Dynamic balance according to Claim 1, **characterized in that** the first weighing unit (1, 1', 1^, 1", 1$^\diamond$, 1''') is provided for the quick measurement of a smaller weight of the item to be weighed than the at least second weighing unit (2, 2', 2^, 2", 2$^\diamond$, 2''').

4. Dynamic balance according to Claim 1, **characterized in that** the transport device of the first weighing unit (1, 1', 1^, 1", 1$^\diamond$, 1''') has a transport belt (1.3, 1.3', 1.3^, 1.3", 1.3$^\diamond$, 1.3''') and the transport device of a third weighing unit (3^, 3$^\diamond$) has a transport belt (3.3^, 3.3$^\diamond$).

5. Dynamic balance according to Claim 1, **characterized in that** the transport device of the first weighing unit (1, 1', 1^, 1 ", 1$^\diamond$, 1''') has a transport belt (1.3, 1.3', 1.3^, 1.3", 1.3$^\diamond$, 1.3''') and the transport device of the second weighing unit (2, 2', 2", 2''') has a transport belt (2.3, 2.3', 2.3", 2.3''').

6. Dynamic balance according to Claim 1, **characterized in that** the weighing pans of the weighing units are designed reduced in length and adjacent to one another in the transport direction and are arranged on the same upper level, that at least a first weighing pan (1.2, 1.2', 1.2^, 1.2", 1.2$^\diamond$, 1.2''') of the adjacent weighing pans comprises the transport device for items to be weighed, that the weighing cells of each of the weighing units are arranged in such a cascaded manner in the direction of gravity that the weight of the item to be weighed, the total weight of the first weighing unit and the weight of at least one second weighing pan (2.2, 2.2', 2.2^, 2.2", 2.2$^\diamond$, 2.2''') weigh on the second weighing cell (2.7, 2.7', 2.7^, 2.7", 2.7$^\diamond$, 2.7''') of the at least second weighing unit (2, 2', 2^, 2", 2$^\diamond$, 2'''), wherein the first weighing unit comprises the first weighing pan (1.2, 1.2', 1.2^, 1.2", 1.2$^\diamond$, 1.2''') and the associated transport device, and that the first weighing pan (1.2, 1.2', 1.2^, 1.2", 1.2$^\diamond$, 1.2''') of the first weighing unit is arranged before the second weighing pan (2.2, 2.2', 2.2^, 2.2", 2.2$^\diamond$, 2.2''') of the second weighing unit arranged in transport direction, that the first sensor (S1, S1') is arranged upstream of the transport device of the first weighing pan (1.2), that the second sensor (S2, S2') is arranged downstream of the transport device of the first weighing pan (1.2, 1.2') and a third sensor (S3) is arranged close to the downstream end of the transport device of the second weighing pan (2.2, 2.2') and that the control unit (1.1, 1.1 ") is programmed for:

- triggering a motor of the transport device of at least a first weighing unit (1, 1", 1^, 1", 1$^\diamond$, 1''') upon receipt of a start signal;
- starting a plurality of weighing processes in the dynamic weighing mode when the first sensor (S1, S1') signals an arrival of the front edge of a fed item to be weighed;
- checking, when the second sensor (S2, S2') signals an arrival of the front edge of a fed item to be weighed, whether the electronic circuit (1.72) of the connected weighing cell (1.7) of the first weighing unit delivers or not yet delivers a stable signal, wherein with a stable signal several measuring values for a measuring curve are available and the measuring curve contains, after a rising section, at least two inflection points and two turning points by which the weight measurement can be successfully performed;
- triggering at least one motor (1.8, 1.8", 2.8, 2.8') so that the item to be weighed is further transported in transport direction z onto the weighing pan (2.2) of the second weighing unit; and
- upon successful weight measurement, causing an input/output unit (1.128) of the common control unit to send a respective signal to an automatic feeding station arranged upstream of the first weighing unit for feeding a subsequent item to be weighed to the weighing pan (1.2, 1.2') of the first weighing unit; or
- otherwise continuing the weighing process with the weighing cell (2.7) of the last used second weighing unit until the third sensor (S3) signals an arrival of the front edge of a fed item to be weighed;
- checking, upon arrival of the front edge of a fed item to be weighed at the end of the transport device of the second weighing pan, whether the electronic circuit (2.72) of the connected weighing cell (2.7) of the second weighing unit delivers or not yet delivers a stable signal; and either
- successfully completing the weight measurement with the weighing cell (2.7) of the second weighing unit, wherein the electronic device (2.72) of the connected weighing cell (2.7) of the second weighing unit delivers a stable signal; or
- otherwise switching the dynamic balance from the dynamic weighing mode over to a semi-dynamic weighing mode, wherein the at least one motor (1.8, 1.8', 2.8, 2.8") is triggered in such a manner in the semi-dynamic weighing mode that the transport of the item to be weighed is stopped or the item to be weighed is transported back at least to the last used weighing pan (1.2) and is weighed then.

7. Dynamic balance according to Claims 1 to 4, **characterized in that** a fourth sensor (S4^, S4$^\diamond$) is arranged near the downstream end of the transport device of the weighing pan (3.2^, 3.2$^\diamond$) of the third weighing unit (3^, 3$^\diamond$) and that the control unit (1.1^, 1.1$^\diamond$) is electrically connected, at its input side, on the one hand, via a line for a signal (LS1^, LS1$^\diamond$) with the first sensor (S1^, S1$^\diamond$), via a line for a signal (LS2^, LS2$^\diamond$) with the second sensor (S2^, S2$^\diamond$), via a line for a signal (LS3^, LS3$^\diamond$) with the third sensor (S3^, S3$^\diamond$), via a line for a signal (LS4^, LS4$^\diamond$) with the forth sensor (S4^, S4$^\diamond$) and, on the other hand, via lines for the signals (En1.6^, En1.6$^\diamond$ and En3.6^, En3.6$^\diamond$) with the encoder of the transport device of the weighing pan (1.2^, 1.2$^\diamond$) of the first weighing unit (1^, 1$^\diamond$) and with the encoder of the transport device of the weighing pan (3.2^, 3.2$^\diamond$) of the third weighing unit (3^, 3$^\diamond$) as well as, at its output side, via lines for the signals (M1.8^, M1.8$^\diamond$ and M3.8^, M3.8°) with a first motor of the transport device of the weighing pan (1.2^, 1.2$^\diamond$) of the first weighing unit (1^, 1°) and with a third motor of the transport device of the weighing pan (3.2^ 3.2°) of the third weighing unit (3^, 3$^\diamond$).

8. Dynamic balance according to Claims 1 - 3 and 5, **characterized in that** the control unit (1.1, 1.1', 1.1", 1.1''') is electrically connected, at its input side, on the one hand, via a line for a signal (LS1, LS1', LS1", LS1''') with the first sensor (S1, S1', S", S'''), via a line for a signal (LS2, LS2', LS2", LS2''') with the second sensor (S2, S2', S2", S2'''), via a line for a signal (LS3, LS3', LS3", L53''') with the third sensor (S3, S3', S3", S3''') and, on the other hand, via lines for the signals (En1.6, En1.6', En1.6", En1.6''' and En2.6, En2.6', En2.6", En2.6''') with the encoder of the transport device of the weighing pan of the first weighing unit (1, 1', 1", 1''') and with the encoder of the transport device of the weighing pan of the second weighing unit (2, 2', 2", 2''') as well as, at its output side, via lines for the signals (M1.8, M1.8', M1.8", M1.8''' and M2.8, M2.8', M2.8", M2.8''') with a first motor of the transport device of the weighing pan of the first weighing unit (1, 1', 1", 1'''') and with a second motor of the transport device of the weighing pan of the second weighing unit (2, 2', 2", 2''').

9. Dynamic balance according to Claims 1, 6 and 8, **characterized in that** the measuring results of the second weighing cell are used for a plausibility check of the results of the first weighing cell.

10. Dynamic balance according to Claims 1 and 7, **characterized in that** the measuring results of the third weighing cell are used for a plausibility check of the results of the second weighing cell.

11. Dynamic balance according to one of the preceding claims, **characterized in that** the first weighing cell and the at least second weighing cell are operated with different initial loads, that, on a carrier (2.21) carrying the second weighing pan (2.2) and the transport device mounted on the latter, there is fixed a first control board (1.110) that only adds to the weighing of the second weighing cell (2.7), that the first control board (1.110) is fixed at an assembly point that, due to the choice of the assembly point, allows for short electrical connections for triggering the first motor (1.8) and for receiving the measuring signals from the first weighing cell and/or for a wireless connection.

12. Method for operating the dynamic balance with a plurality of weighing units according to Claim 1, **characterized by** the following steps:

    - provision of a first weighing unit (1, 1') and of at least a second weighing unit (2, 2'), each of the weighing units having a weighing pan with a transport device and a weighing cell;
    - feeding of an item to be weighed onto the weighing pan of the first weighing unit (1, 1'), simultaneous starting of the weight measurement in all weighing cells and performance of the weight measurement of the item to be weighed during its transport in transport direction z, the weighing cells of all weighing units being involved in the weight measurement right from the start;
    - feeding of a next following item to be weighed onto the weighing pan of the first weighing unit (1, 1') and/or further transport of the item to be weighed onto the weighing pan of the second weighing unit (2, 2') for further weight measurement of the item to be weighed during its transport in transport direction z, depending on the signal of the weighing cell of the first weighing unit (1, 1'); and
    - further operation of the dynamic balance depending on the signals of the weighing cells.

13. Method according to Claim 12, **characterized by** the following steps:

    - triggering of the motor (1.8, 1.8') of the transport device at least of the first weighing unit (1, 1') by a common control unit upon receipt of a start signal;
    - starting of a plurality of weighing processes in the dynamic weighing mode by the control unit when a first sensor (S1, S1') arranged at the upstream start of the first weighing unit signals an arrival of the front edge of a fed item to be weighed;

- checking by the control unit, when a second sensor (S2, S2') arranged at the downstream end of the first weighing unit (1, 1') signals an arrival of the front edge of a fed item to be weighed, whether the electronic measuring circuit of the connected first weighing cell (1.7, 1.7') delivers or not yet delivers a stable signal, wherein with a stable signal several measuring values for a measuring curve are available and the measuring curve contains, after a rising section, at least two inflection points and two turning points by which the weight measurement can be successfully performed;

- further transport of the item to be weighed in transport direction onto the weighing pan of the second weighing unit (2, 2');

- sending of a respective signal by the control unit (1.1, 1.1') via an input/output unit (1.128) to an automatic feeding station arranged upstream of the first weighing unit (1, 1') for feeding a subsequent item to be weighed to the first weighing unit; or

- in case of a non successful weight measurement, continuation of the weighing process with the second weighing cell until a third sensor arranged at the downstream end of the second weighing unit signals an arrival of the front edge of a fed item to be weighed, and

- checking, upon arrival of the front edge of a fed item to be weighed, whether the electronic measuring circuit of the connected second weighing cell (2.7, 2.7') delivers or not yet delivers a stable signal; as well as

- finding that the weight measurement with the second weighing cell (2.7, 2.7') has been successfully completed when the measuring circuit of the connected second weighing cell (2.7, 2.7') delivers a stable signal; or

- finding that the weight measurement with the second weighing cell has not been successfully completed when the measuring circuit of the connected second weighing cell (2.7, 2.7') does not deliver a stable signal;

- switching of the control unit (1.1, 1.1') over from a dynamic weighing mode into a semi-dynamic weighing mode in case of a non successful weight measurement and triggering of the at least one motor by the control unit so that the transport of the item to be weighed is stopped or the item to be weighed is transported back to the last used weighing pan and is weighed then.

**14.** Method according to Claims 12 to 13, **characterized by** a performance of a plausibility check of the measuring results of the weighing cells.

## Revendications

**1.** Dispositif de pesage dynamique doté de plusieurs unités de pesage, chaque unité de pesage étant équipée d'au moins une cellule de pesée et d'un plateau de pesage, le plateau de pesage étant situé à un niveau supérieur et la cellule de pesée étant agencée entre le niveau supérieur et un niveau inférieur éloigné du niveau supérieur dans le sens de la gravité, avec des capteurs et avec un dispositif de transport pour le transport d'un article à peser pendant le pesage dans un sens de transport, le dispositif de transport comportant un moteur (1.8) pour l'entraînement du dispositif de transport précité et un encodeur (1.6), et dont sont reliés électriquement les capteurs (S1, S2) et l'encodeur (1.6) aux entrées d'une unité de commande (1.1) et le moteur (1.8) pour l'entraînement du dispositif de transport précité aux sorties de l'unité de commande (1.1), **caractérisé en ce,**

- **que** soient prévues une première unité de pesage (1,1', 1^, 1", 1°, 1''') et au moins une deuxième unité de pesage (2, 2', 2^, 2", 2°, 2''') avec un agencement voisin en série sur le chemin de transport d'un deuxième plateau de pesage (2.2, 2.2', 2.2^, 2.2", 2.2°, 2.2''') par rapport à un premier plateau de pesage (1.2, 1.2', 1,2^, 1.2", 1.2°, 1.2''') avec en même temps un agencement fonctionnel en cascade dans le sens de la gravité des cellules de pesée, de sorte que le poids de l'article à peser et le poids total de la première unité de pesage et le poids d'au moins un autre plateau de pesage de l'au moins deuxième unité de pesage agissent en tant que précharge sur la cellule de pesée de l'au moins deuxième unité de pesage, l'au moins deuxième unité de pesage étant fixée en position couchée par son niveau inférieur sur un niveau de référence x/z et

- **que** soit prévu une unité de commande commune (1.1, 1.1', 1.1^) du dispositif de pesage dynamique pour l'exécution d'un démarrage simultané des opérations de pesage en mode de pesage dynamique, pour la commande de tous les moteurs (1.8, 1.8', 1.8^) raccordés électriquement à l'unité de commande en fonction de signaux des capteurs (S1, S1', S1^, S2, S2', S2^) et de l'encodeur pour la détermination et la régulation de la vitesse de transport et pour l'évaluation des mesures de poids et que le dispositif de pesage dynamique soit commandé en fonction des signaux des cellules de pesée.

**2.** Dispositif de pesage dynamique selon la revendication 1, **caractérisé en ce, que** le plateau de pesage d'une n-ième unité de pesage soit agencé en dernière position sur le chemin de transport dans le sens du transport et que soit reliée mécaniquement de manière fixe une cellule de pesée faisant partie du plateau de pesage agencé en dernier sur le chemin de transport par l'intermédiaire d'un bloc de fixation (L2, L2' ou L3, L3') à une plaque de fond (B) du dispositif de pesage dynamique, la plaque de fond étant agencée en position couchée dans le niveau de référence x/z.

3. Dispositif de pesage dynamique selon la revendication 1, **caractérisé en ce, que** la première unité de pesage (1, 1', 1^, 1", 1°, 1''') soit prévue pour la mesure rapide d'un poids plus petit par rapport à l'au moins deuxième unité de pesage (2, 2', 2^, 2", 2°, 2''').

4. Dispositif de pesage dynamique, selon la revendication 1, **caractérisé en ce, que** le dispositif de transport de la première unité de pesage (1, 1', 1^, 1", 1°, 1''') présente une bande transporteuse (1.3, 1.3', 1.3^, 1.3", 1.3°, 1.3''') et que le dispositif de transport d'une troisième unité de pesage (3^, 3°) présente une bande transporteuse (3.3^, 3.3°).

5. Dispositif de pesage dynamique, selon la revendication 1, **caractérisé en ce, que** le dispositif de transport de la première unité de pesage (1, 1', 1^, 1", 1°, 1''') présente une bande transporteuse (1.3, 1.3', 1.3^, 1.3", 1.3°, 1.3''') et que le dispositif de transport de la deuxième unité de pesage (2, 2', 2", 2''') présente une bande transporteuse (2.3, 2.3', 2.3", 2.3''').

6. Dispositif de pesage dynamique, selon la revendication 1, **caractérisé en ce, que** les plateaux de pesage des unités de pesage soient raccourcis et voisins entre eux dans le sens du transport ainsi qu'agencés sur le même niveau supérieur, qu'au moins un premier plateau de pesage (1.2, 1.2', 1.2^, 1.2", 1.2°, 1.2''') des plateaux de pesage voisins entre eux présente le dispositif de transport pour les articles à peser, que les cellules de pesée de chacune des unités de pesage soient agencées en cascade dans le sens de la gravité de sorte, que le poids de l'article à peser, le poids total de la première unité de pesage et le poids d'au moins un deuxième plateau de pesage (2.2, 2.2', 2.2^, 2.2", 2.2°, 2.2''') agissent sur la deuxième cellule de pesée (2.7, 2.7', 2.7^, 2.7", 2.7°, 2.7''') de l'au moins deuxième unité de pesage (2, 2', 2^, 2", 2°, 2'''), la première unité de pesage comportant le premier plateau de pesage (1.2, 1.2', 1.2^, 1.2", 1.2°, 1.2''') et le dispositif de transport correspondant, et que le premier plateau de pesage (1.2, 1.2', 1.2^, 1.2", 1.2°, 1.2''') de la première unité de pesage soit agencé avant le deuxième plateau de pesage (2.2, 2.2', 2.2^, 2.2", 2.2°, 2.2''') situé dans le sens du transport et faisant partie de la deuxième unité de pesage, que le premier capteur (S1, S1') soit agencé en amont du flux du dispositif de transport du premier plateau de pesage (1.2), que le deuxième capteur (S2, S2') soit agencé en aval du flux du dispositif de transport du premier plateau de pesage (1.2, 1.2') et qu'un troisième capteur (S3) soit agencé à proximité de l'extrémité située en aval du flux du dispositif de transport du deuxième plateau de pesage (2.2, 2.2') et que l'unité de commande (1.1, 1.1') soit programmée :

- pour commander lors de l'arrivée d'un signal de démarrage un moteur du dispositif de transport d'au moins une première unité de pesage (1, 1", 1^, 1", 1°, 1'''),
- pour démarrer une pluralité d'opérations de pesage en mode de pesage dynamique, lorsque le premier capteur (S1, S1') signale l'arrivée du bord frontal d'un article à peser acheminé,
- pour contrôler si le module électronique (1.72) de la cellule de pesée (1.7) connectée de la première unité de pesage fournit ou ne fournit pas encore un signal stable lorsque le deuxième capteur (S2, S2') signale une arrivée du bord avant d'un article à peser acheminé, plusieurs valeurs de mesure étant disponibles pour une courbe de mesures en cas de signal stable, ladite courbe de mesures présentant au moins deux points d'inflexion et deux points d'inversion après une partie croissante, ce qui permet d'exécuter avec succès la mesure du poids,
- pour commander au moins un moteur (1.8, 1.8', 2.8, 2.8'), afin que l'article à peser soit transporté plus loin dans le sens de transport z sur le plateau de pesage (2.2) de la deuxième unité de pesage et,
- qu'en cas de réussite de la mesure du poids, pour initier qu'une unité d'entrée/de sortie (1.128) de l'unité de commande commune délivre un signal correspondant à une station d'acheminement automatique située en amont de la première unité de pesage pour l'acheminement d'un article à peser suivant sur le plateau de pesage (1.2, 1.2') de la première unité de pesage ou,
- sinon, de poursuivre l'opération de pesage avec la cellule de pesée (2.7) de la deuxième unité de pesage utilisée en dernier jusqu'à ce que le troisième capteur (S3) signale l'arrivée du bord avant d'un article à peser acheminé,
- pour contrôler si le module électronique (2.72) de la cellule de pesée (2.7) connectée de la deuxième unité de pesage fournit ou ne fournit pas encore un signal stable lors de l'arrivée du bord avant d'un article à peser acheminé à l'extrémité du dispositif de transport du deuxième plateau de pesage ainsi
- que pour, ou bien achever avec succès la mesure du poids avec la cellule de pesée (2.7) de la deuxième unité de pesage, le module électronique (2.72) de la cellule de pesée connectée (2.7) de la deuxième unité de pesage délivrant un signal stable, ou bien,

- à défaut de cela, d'exécuter une commutation du dispositif de pesage dynamique pour passer du mode de pesage dynamique sur un mode de pesage semi-dynamique, l'au moins un moteur (1.8, 1.8', 2.8, 2.8') étant commandé dans le mode semi-dynamique de telle sorte, que le transport de l'article à peser soit arrêté ou que l'article à peser soit au moins transporté en retour sur le plateau de pesage (1.2) utilisé en dernier et qu'il soit ensuite pesé.

7. Dispositif de pesage dynamique, selon les revendications 1 à 4, **caractérisé en ce, qu'**un quatrième capteur (S4^, S4°) soit agencé à proximité de l'extrémité située en aval du flux du dispositif de transport du plateau de pesage (3.2^, 3.2°) de la troisième unité de pesage (3^, 3°) et que l'unité de commande (1.1^, 1.1°) soit reliée électriquement, d'une part, au niveau de ses entrées par l'intermédiaire d'une ligne pour un signal (LS1 ^, LS1°) au premier capteur (S1^, S1°), par l'intermédiaire d'une ligne pour un signal (LS2^, LS2°) au deuxième capteur (S2^, S2°), par l'intermédiaire d'une ligne pour un signal (LS3^, LS3°) au troisième capteur (S3^, S3°), par l'intermédiaire d'une ligne pour un signal (LS4^, LS4°) au quatrième capteur (S4^, S4°) et, d'autre part, par l'intermédiaire de lignes pour les signaux (En1.6^, En1.6° et En3.6^, En3.6°) à l'encodeur du dispositif de transport du plateau de pesage (1.2^, 1.2°) de la première unité de pesage (1^, 1°) et à l'encodeur (3.2^, 3.2°) de la troisième unité de pesage (3^, 3°) ainsi qu'elle soit reliée électriquement au niveau de ses sorties par l'intermédiaire de lignes pour les signaux (M1.8^, M1.8° et M3.8^, M3.8°) à un premier moteur du dispositif de transport du plateau de pesage (1.2^, 1.2°) de la première unité de pesage (1^, 1°) et à un troisième moteur du dispositif de transport du plateau de pesage (3.2^ 3.2°) de la troisième unité de pesage (3^, 3°).

8. Dispositif de pesage dynamique, selon les revendications 1 à 3 et 5, **caractérisé en ce, que** l'unité de commande (1.1, 1.1', 1.1", 1.1"') soit reliée électriquement, d'une part, au niveau de ses entrées par l'intermédiaire d'une ligne pour un signal (LS1, LS1', LS1", LS1"') au premier capteur (S1, S1', S1^, S1"'), par l'intermédiaire d'une ligne pour un signal (LS2, LS2', LS2", LS2"') au deuxième capteur (S2, S2', S2", S2"'), par l'intermédiaire d'une ligne pour un signal (LS3, LS3', LS3", LS3"') au troisième capteur (S3, S3', S3", S3"') et, d'autre part, par l'intermédiaire de lignes pour les signaux (En1.6, En1.6', En1.6", En1.6"' et En2.6, En2.6', En2.6", En2.6"') à l'encodeur du dispositif de transport du plateau de pesage de la première unité de pesage (1, 1', 1", 1"') et à l'encodeur du dispositif de transport du plateau de pesage de la deuxième unité de pesage (2, 2', 2", 2"') ainsi qu'elle soit reliée électriquement au niveau de ses sorties par l'intermédiaire de lignes pour les signaux (M1.8, M1.8', M1.8", M1.8"' et M2.8, M2.8', M2.8", M2.8"') à un premier moteur du dispositif de transport du plateau de pesage de la première unité de pesage (1, 1', 1", 1"') et à un deuxième moteur du dispositif de transport du plateau de pesage de la deuxième unité de pesage (2, 2', 2", 2"').

9. Dispositif de pesage dynamique, selon la revendication 1, 6 et 8, **caractérisé en ce, que** les résultats des mesures de la deuxième cellule de pesée soient utilisés pour le contrôle de plausibilité des résultats de la première cellule de pesée.

10. Dispositif de pesage dynamique, selon la revendication 1 et 7, **caractérisé en ce, que** les résultats des mesures de la troisième cellule de pesée soient utilisés pour le contrôle de plausibilité des résultats de la deuxième cellule de pesée.

11. Dispositif de pesage dynamique, selon l'une des revendications précédentes, **caractérisé en ce, que** la première cellule de pesée et l'au moins deuxième cellule de pesée soient exploitées avec une précharge différente, que soit fixé à un support (2.21), qui supporte le deuxième plateau de pesage (2.2) et le dispositif de transport monté sur celui-ci, une première carte de commande (1.110) dont le poids est aussi mesuré lors du pesage exécuté par la deuxième cellule de pesée (2.7), que la première carte de commande (1.110) soit fixée à un emplacement de montage, dont le choix permet de réaliser de courtes connexions électriques, pour la commande du premier moteur (1.8) et pour la réception des signaux de mesure de la première cellule de pesée, et/ou une connexion sans fil.

12. Procédé de fonctionnement du dispositif de pesage dynamique, avec une pluralité d'unités de pesage, selon la revendication 1, **caractérisé par** les étapes suivantes :

   • prévoir une première unité de pesage (1, 1') et au moins une deuxième unité de pesage (2, 2'), les unités de pesage comportant chacune un plateau de pesage avec un dispositif de transport et une cellule de pesée,
   • acheminement d'un article à peser sur le plateau de pesage de la première unité de pesage (1, 1'), démarrage simultané de la mesure du poids dans toutes les cellules de pesée et exécution de la mesure du poids de l'article à peser pendant son transport dans le sens de transport z, les cellules de pesée de toutes les unités de pesage participant dès le début à la mesure du poids,

• Acheminement d'un article à peser suivant sur le plateau de pesage de la première unité de pesage (1, 1') et/ou continuation du transport de l'article à peser sur le plateau de pesage de la deuxième unité de pesage (2, 2') pour une autre mesure du poids de l'article à peser pendant son transport dans le sens de transport z, en fonction du signal de la cellule de pesée de la première unité de pesage (1, 1') et

• poursuite du fonctionnement du dispositif de pesage dynamique en fonction des signaux des cellules de pesée.

**13.** Procédé selon la revendication 12, **caractérisé par** les étapes suivantes :

- commande du moteur (1.8, 1.8') du dispositif de transport au moins de la première unité de pesage (1, 1') par une unité de commande commune à la réception d'un signal de démarrage,

- démarrer une pluralité d'opérations de pesage en mode de pesage dynamique par l'unité de commande, si le premier capteur (S1, S1') agencé au début situé en amont du flux de la première unité de pesage signale l'arrivée du bord avant d'un article à peser acheminé,

- contrôler par l'unité de commande si le module électronique de mesure de la première cellule de pesée (1.7, 1.7') connectée fournit ou ne fournit pas encore un signal stable, lorsque le deuxième capteur (S2, S2') agencé à l'extrémité située en aval du flux de la première unité de pesage (1, 1') signale une arrivée du bord avant d'un article à peser acheminé, plusieurs valeurs de mesure étant disponibles pour une courbe de mesures en cas de signal stable, ladite courbe de mesures présentant au moins deux points d'inflexion et deux points d'inversion après une partie croissante, ce qui permet d'exécuter avec succès la mesure du poids,

- continuation du transport de l'article à peser dans le sens du transport sur le plateau de pesage de la deuxième unité de pesage (2, 2'),

- délivrance d'un signal correspondant par l'unité de commande (1.1, 1.1') par l'intermédiaire d'une unité d'entrée/de sortie (1.128) à une station d'acheminement automatique située en amont de la première unité de pesage (1, 1') pour l'acheminement d'un article à peser suivant sur la première unité de pesage ou,

- en cas de non-exécution de la mesure du poids, poursuite de l'opération de pesage avec la deuxième cellule de pesée jusqu'à ce qu'un troisième capteur agencé à l'extrémité située en aval du flux de la deuxième unité de pesage signale une arrivée du bord avant d'un article à peser acheminé, et

- contrôle, à l'arrivée du bord avant d'un article à peser acheminé, si le module électronique de mesure de la deuxième cellule de pesée (2.7, 2.7') connectée fournit ou ne fournit pas encore un signal stable, ainsi que,

- déterminer que la mesure de poids avec la deuxième cellule de pesée (2.7, 2.7') a été achevée avec succès, si le module électronique de mesure de la deuxième cellule de pesée (2.7, 2.7') connectée fournit un signal stable ou

- déterminer que la mesure de poids avec la deuxième cellule de pesée n'a pas été achevée avec succès, si le module électronique de mesure de la deuxième cellule de pesée (2.7, 2.7') connectée ne fournit pas de signal stable,

- commuter par l'unité de commande (1.1, 1.1') pour passer d'un mode de pesage dynamique sur un mode de pesage semi-dynamique en cas non-réussite de la mesure du poids et commande par l'unité de commande de l'au moins un moteur, de sorte que le transport de l'article à peser soit arrêté ou que l'article à peser soit transporté en retour sur le plateau de pesage utilisé en dernier et qu'il soit ensuite pesé.

**14.** Procédé selon les revendications 12 à 13, **caractérisé par** une exécution d'un contrôle de plausibilité des résultats des mesures des cellules de pesée.

Prior Art

Poststück — P*

1.3*
Transportband

1.1* 1.14*

1*

Steuereinheit | I / O

c

n

1.8*
Motor

Encoder
1.6*

1.61*
Encoderscheibe

S2*

S1*

o

Rolle
1.4*

Dehnungsmeßstreifen — 1.71*

Wägeschale
1.2*

Antriebsrolle
1.5*

Meß-
Elektronik 1.72*

c

Wägezelle
1.7*

n

Welle
1.51*

Netzteil — 1.9*

Bodenplatte B*

**Fig. 1**

P

G

v = konstant

y

z

1.2

$F = G + Fw$

Dehnungsmeßstreifen    s

Kraftmeßpunkt M1

Befestigungs-
Block    L1

1.7

B

Bodenplatte

**Fig. 2a**

$l$

$F = m \cdot g$

$h$

b

h

**Fig. 2b**

**Fig. 2c**

Messwert
g

Messzeit für
Wägezelle II

Messzeit für
Wägezelle I

Wägegut ist schwer
und lang in
Transportrichtung

U$_{21}$

W$_{21}$

U$_{22}$

W$_{22}$

- - - - Wägezelle I

——— Wägezelle II

U$_{11}$   W$_{11}$

U$_{12}$   W$_{12}$

Wägegut ist leicht
und kurz in
Transportrichtung

·········· Wägezelle I

– · – · Wägezelle II

0

t1        t2   t3   t4   t5   t6      t7                    t

Fig. 2d

g

Messzeit für
Wägezelle II

Messzeit für
Wägezelle I

Wägegut ist schwer
und kurz in
Transportrichtung

- - - - Wägezelle I

——— Wägezelle II

Wägegut ist leicht
und lang in
Transportrichtung

·········· Wägezelle I

– · – · Wägezelle II

0

t2                    t7               t

Fig. 2e

26

Fig. 3a

Fig. 3b

Fig. 4

Fig. 5

Fig. 6

Fig. 7a

Fig.7b

Fig. 8

Fig. 9

Sensor S1

Transportband 1.3

Messelektronik 1.72

Messelektronik 2.72

Sensor-Signale LS1 LS2

Encoder-Signale En2 En1

Encoder 1.6 Motor 1.8 S2

Encoder 2.6 Motor 2.8

Transportband 2.3 LS3 S3

Träger 2.21

Steuerplatine 1.110

Motorsteuerung 1.111

Signalsteuerung 1.114

Transceiver 1.115

Transceiver 1.125

Signalsteuerung 1.124

Steuerplatine 1.120

Waagesteuerung 1.123

µP-Steuerung 1.127

Ein/Ausgabeeinheit 1.128

LS1
LS2
LS3
Start-Signal
Zuführungs-Signal

PCB 1

PCB 2

En1
En2

Waagesteuerung 1.112

Spannungsregler 1.113

Spannungsquelle 1.126

Waagesteuerung 1.122

Motorsteuerung 1.121

Fig. 10

31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2065686 A1
- US 20090139777 A1
- US 2009032311 A1
- WO 2007057001 A1
- EP 2017589 A2
- US 2009008859 A1
- EP 974819 B1
- EP 1014052 B1
- EP 907819 B1